# EUROPÄISCHE PATENTSCHRIFT

(11) **EP 3 482 215 B1**
(45) Veröffentlichungstag und Bekanntmachung des Hinweises auf die Patenterteilung: **25.12.2024**
(21) Anmeldenummer: 17734729.1
(22) Anmeldetag: 03.07.2017
(51) Int. Cl.: G01N 35/10

(54) **PIPETTIERVORRICHTUNG MIT VERLAGERBAREM PIPETTIERKANAL MIT VERGRÖSSERTEM LAGERORTABSTAND**
PIPETTING DEVICE WITH A DISPLACEABLE PIPETTING CHANNEL WITH A DISTANCE BETWEEN CLAMP LOCATIONS ON RAILS
DISPOSITIF DE PIPETTAGE COMPRENANT UN EMBOUT DE PIPETAGE DÉPLAÇABLE AVEC UN ÉCART ENTRE LES AGRAFES SUR LES RAILS

(30) Priorität: 07.07.2016 DE 102016212444
(43) Veröffentlichungstag der Anmeldung: 15.05.2019
(73) Patentinhaber: Hamilton Bonaduz AG, 7402 Bonaduz (CH)
(72) Erfinder: ROMER, Hanspeter, 8340 Hinwil (CH); WALPEN, Silvio, 8800 Thalwil (CH)
(74) Vertreter: Ruttensperger Lachnit Trossin Gomoll
(86) Internationale Anmeldenummer: PCT/EP2017/066450
(87) Internationale Veröffentlichungsnummer: WO 2018/007290

(56) Entgegenhaltungen:
- EP-A2- 2 410 342
- WO-A1-2014/041113
- CN-A- 103 586 095
- JP-A- 2003 028 884
- JP-A- 2004 069 664
- JP-A- 2007 003 339

## Beschreibung

Die vorliegende Erfindung betrifft eine Pipettiervorrichtung mit einem Führungsgestell mit einer ersten Linearführungsschiene und mit einer zweiten Linearführungsschiene gemäß dem Oberbegriff des Anspruchs 1.

Eine solche gattungsgemäße Pipettiervorrichtung ist beispielsweise bekannt aus der EP 2 410 342 A2. Diese Druckschrift offenbart ein Führungsgestell mit insgesamt vier parallelen Linearführungsschienen, wobei anscheinend jeweils zwei der vier Führungsschienen zur Führung der Verlagerungsbewegung eines Pipettierkanals längs der imaginären Verlagerungsachse dienen.

Die bekannten vier Führungsschienen sind dabei zu zwei Paaren gruppiert, wobei die zu einem Paar gruppierten Führungsschienen eine geringere Entfernung voneinander als die Führungsschienen unterschiedlicher Gruppen aufweisen.

Die vier Führungsschienen der bekannten Pipettiervorrichtung liegen in einer Ebene und sind identisch ausgerichtet. Auf jeder der vier Führungsschienen sind die darauf beweglich geführten Lagerbauteile auf der zum Pipettierkanal hinweisenden Seite angeordnet, was die Anbringung der offenbarten Mehrzahl an Pipettierkanälen erleichtert.

Ohne dass es in der EP 2 410 342 A2 ausdrücklich offenbart ist, ist davon auszugehen, dass jeder Pipettierkanal an je einer Führungsschiene aus jeder Paar-Gruppe geführt ist und dass weiter längs der Verlagerungsachse benachbarte Pipettierkanäle an unterschiedlichen Führungsschienen verlagerbar geführt sind.

Bei Pipettiervorrichtungen der gattungsgemäßen Art besteht grundsätzlich das Problem, die einzelnen Pipettierkanäle möglichst schlank auszubilden, sodass die Dosieröffnungen bzw. die Kanalachsen von unmittelbar längs der Verlagerungsachse benachbarten Pipettierkanälen längs der Verlagerungsachse einen Abstand von nicht mehr als 9 mm haben. Dadurch werden die einzelnen Pipettierkanäle in Richtung der Verlagerungsachse sehr schlank, verglichen mit ihrer Abmessung längs der Kanalachse, die ein Vielfaches ihrer Abmessung längs der Verlagerungsachse beträgt. In der Regel ist die Abmessung der Lagerbauteile längs der Verlagerungsachse größer als die gleichgerichtete Abmessung der Pipettierkanäle selbst, was die Verwendung von mehr als zwei Führungsschienen erforderlich macht, um unmittelbar längs der Verlagerungsachse benachbarte Pipettierkanäle trotz der im Vergleich zur eigenen Abmessung großen Abmessung der Lagerbauteile längs der Verlagerungsachse auf die geforderten 9 mm einander annähern zu können.

Die längs der Verlagerungsachse schlanke, jedoch längs der Kanalachse ausladende Abmessung eines Pipettierkanals führt zu Problemen bei der verlagerbaren Lagerung der Pipettierkanäle, da die Entfernung der Lagerbauteile orthogonal zur Verlagerungsachse verglichen mit ihrer Lagerungslänge längs der Verlagerungsachse sehr groß ist. Im Betrieb kann es bei Beschleunigungen des Pipettierkanals längs der Verlagerungsachse zu Beschleunigungsmomenten kommen, die um eine sowohl zur Kanalachse als auch zur Verlagerungsachse orthogonale Momentenachse wirken und zu dynamischen Lagerkräften führen, die an den Lagerbauteilen abgestützt werden müssen. Hier kann es bei der bekannten Pipettiervorrichtung selbst bei der Verwendung von auf den jeweiligen Linearführungsschienen wälzkörpergeführten Lagerbauteilen zu kurzfristigen Bewegungsstörungen kommen, etwa durch Verklemmungen, sodass der Betrieb der Pipettiervorrichtung entweder gestört ist oder langsamer als gewünscht ablaufen muss.

Aus der JP 2003-028884 A ist eine Pipettiervorrichtung bekannt, welche eine Mehrzahl von Pipettierkanälen aufweist. Die Pipettierkanäle sind an Knoten eines Scherenmechanismus angeordnet, welcher zwischen zwei Basisplatten eingespannt ist. Durch Annäherung der Basisplatten aneinander wird der Scherenmechanismus gegen seine Vorspannung gestreckt, so dass sich der Abstand zwischen allen Pipettierkanälen, die so genannte "Pipettierkanal-Teilung" vergrößert. Durch Entfernen der Basisplatten zieht sich der entsprechend vorgespannte Scherenmechanismus unter Verringerung der Pipettierkanal-Teilung zusammen.

Die beschriebene Pipettiervorrichtung der JP 2003-028884 A wird durch eine Bewegungseinrichtung gegriffen und von dieser parallel und orthogonal zu einer Arbeitsebene bewegt, in welcher zu pipettierende Behälter angeordnet sind.

Aus der WO 2014/041113 A1 ist eine Pipettiervorrichtung bekannt, mit vier parallelen, längs der Verlagerungsachse verlaufenden Führungsschienen, wobei von jeweils vier längs der Verlagerungsachse unmittelbar aufeinander folgenden Pipettierkanäle jeder an einer anderen Führungsschiene verlagerbar gelagert ist.

Aus der JP 2007-003339 A ist eine Pipettiervorrichtung mit vier parallelen, längs der Verlagerungsachse verlaufenden Führungsschienen sowie mit einer Mehrzahl von Pipettierkanälen bekannt. Die vier Führungsschienen verlaufen längs von Kanten eines sich längs der Verlagerungsache erstreckenden Quaders. Je zwei Führungsschienen liegen längs der Kanalachse genau übereinander. Je zwei andere Führungsschienen liegen einander längs einer sowohl zur Verlagerungsachse als auch zu den Kanalachsen orthogonalen Versatzachse genau gegenüber. Ein Pipettierkanal ist dabei stets an zwei längs der Kanalachse genau übereinander liegenden Führungsschienen zur Bewegung längs der Verlagerungsachse geführt. Längs der Verlagerungsachse unmittelbar benachbarte Pipettierkanäle sind an unterschiedlichen, längs der Versatzachse mit Abstand voneinander angeordneten Führungsschienenpaaren gelagert. Die Pipettierkanal-Teilung von Pipettierkanälen eines Führungsschienenpaars ist durch einen Scherenmechanismus veränderbar.

Aus der JP 2004-069664 A ist eine weitere Pipettiervorrichtung mit individuell antreibbaren Pipettierkanälen bekannt.

Aufgabe der vorliegenden Erfindung ist es, die eingangs genannte Pipettiervorrichtung so zu verbessern, dass die oben geschilderten Nachteile verringert oder gar beseitigt werden.

Diese Aufgabe wird gemäß der vorliegenden Erfindung gelöst durch eine Pipettiervorrichtung mit allen Merkmalen des Anspruchs 1.

Durch Änderung der Anordnung der mit ein und demselben Pipettierkanal gemeinsam längs der Verlagerungsachse verlagerbaren Lagerbauteile derart, dass diese beiden Lagerbauteile längs der Verlagerungsachse mit Abstand voneinander angeordnet sind, wird an der Lagerung des Pipettierkanals eine größere Lagerungslänge in Richtung der Verlagerungsachse erzielt, als dies mit den bisher bekannten Lagerungen der Fall ist, bei welchen die beiden ein und denselben Pipettierkanal lagernden Lagerbauteile stets an derselben Position längs der Verlagerungsachse angeordnet sind. Durch die so vergrößerte Lagerungslänge können störende "Schubladeneffekte" vermieden werden, wie sie bei der Betätigung von in Öffnungsrichtung kurzen, jedoch im Verhältnis hierzu orthogonal zur Öffnungsrichtung breiten Schubladen bekannt sind. Derartige Laden verklemmen während einer Auszugs oder Einschubbewegung häufig wiederholt.

Zwar ist das Führungsgestell der erfindungsgemäßen Pipettiervorrichtung längs der Verlagerungsachse in etwa um den Abstand zwischen erstem und zweitem Lagerbauteil länger auszuführen als der tatsächlich längs der Verlagerungsachse nutzbare Verlagerungsweg des Pipettierkanals, jedoch wird dieser geringfügig größere Bauraumaufwand durch die aufgrund der verbesserten Lagerung des Pipettierkanals möglichen höheren Beschleunigungen und Verlagerungsgeschwindigkeiten längs der Verlagerungsachse mehr als wett gemacht. Der Pipettierkanal kann somit längs der Verlagerungsachse stark beschleunigt und mit hoher Geschwindigkeit bewegt werden, was über die Betriebsdauer der Pipettiervorrichtung zu einem erheblichen Pro duktivitätsvorteil führt. Grundsätzlich kann das erste oder/und das zweite Lagerbauteil der vorliegenden Erfindung ein mit Gleitlagerung an der Linearführungsschiene längs der Verlagerungsachse verlagerbar gelagertes Lagerbauteil sein. Aus Gründen besonders geringer Reibung ist eine Lagerung des ersten oder/und des zweiten Lagerbauteils an der Linearführungsschiene mit Wälzkörpern bevorzugt, etwa durch einen Kugelumlauf.

Eine Linearführungsschiene im Sinne der vorliegenden Erfindung ist jedes ein Lagerbauteil zur Bewegung längs der Verlagerungsachse führendes Bauteil. Bevorzugt umgreift das erste oder/und das zweite Lagerbauteil die Linearführungsschiene, sodass das erste oder/und das zweite Lagerbauteil bevorzugt auf der dem jeweiligen Lagerbauteil zugeordneten Linearführungsschiene reitet. Alternativ kann jedoch auch die Linearführungsschiene das ihr zugeordnete Lagerbauteil umgreifen, sodass das Lagerbauteil in einer Nut der Linearführungsschiene beweglich geführt aufgenommen sein kann, etwa, wenn das Lagerbauteil aus Gründen des verfügbaren Bauraums orthogonal zur Verlagerungsachse nicht über die Linearführungsschiene vorstehen soll.

Bevorzugt sind das erste und das zweite Lagerbauteil zur Verringerung der Anzahl an zur Herstellung der Pipettiervorrichtung notwendigen unterschiedlichen Bauteilen gleiche Lagerbauteile und sind im Wesentlichen identisch ausgeführt. Entsprechendes gilt für die die Lagerbauteile führenden Linearführungsschienen. Auch diese sind bevorzugt im Wesentlichen identisch ausgebildet.

Es sei darauf hingewiesen, dass die identische konstruktive Ausbildung eines Bauteils vorliegend gesondert von der Anordnung von konstruktiv identisch ausgebildeten Bauteilen relativ zueinander zu betrachten ist. Wie weiter unten näher erläutert werden wird, ist es für die vorliegende Erfindung mitunter vorteilhaft, wenn Bauteile zur Vermeidung einer unnötig hohen Anzahl unterschiedlicher Bauteile zwar konstruktiv identisch ausgebildet sind, jedoch relativ zueinander in unterschiedlicher Weise an der Pipettiervorrichtung oder insbesondere an dem Führungsgestell angeordnet sind.

Wenngleich dies nicht zwingend notwendig ist, ist es, um betragsmäßig möglichst gleich große dynamische Lagerkräfte an den beiden Lagerbauteilen zu erhalten, vorteilhaft, wenn der Abstand des ersten Lagerbauteils längs der Verlagerungsachse vom Pipettierkanal und der Abstand des zweiten Lagerbauteils längs der Verlagerungsachse vom Pipettierkanal betragsmäßig gleich groß sind. Das erste Lagerbauteil kragt dann längs der Verlagerungsachse vom Pipettierkanal in der einen Richtung genauso weit aus wie das zweite Lagerbauteil in der entgegengesetzten Richtung.

Es kann jedoch unter Umständen, etwa wenn die durch einen Bewegungsantrieb auf den Pipettierkanal ausgeübte Beschleunigungskraft ausreichend entfernt vom Schwerpunkt des verlagerbaren Pipettierkanals an diesem angreift und somit ein dynamisches Moment erzeugt, vorteilhaft sein, wenn der Abstand des Pipettierkanals von einem Lagerbauteil größer ist als von dem anderen Bauteil. Dabei kann sogar eine Konfiguration gewählt sein, bei welcher sich der Pipettierkanal längs der Verlagerungsachse stets am selben Ort, d. h. in diesem Fall an derselben Verlagerungsachskoordinate, befindet wie eines der beiden Lagerbauteile und nur das jeweils andere Lagerbauteil längs der Verlagerungsachse vom Pipettierkanal mit Abstand vorgesehen ist.

Gemäß einer vorteilhaften Weiterbildung der vorliegenden Erfindung können das erste und das zweite Lagerbauteil längs einer zur Verlagerungsachse orthogonalen und von einer Entfernungsachse, welche in Richtung der kürzesten Entfernung zwischen der ersten und der zweiten Linearführungsschiene verläuft, verschiedenen Versatzachse mit Versatz voneinander angeordnet sein.

Durch diese Maßnahme wird wiederum eine Lagerungsabmessung, diesmal in Richtung der Versatzachse, um den Versatzbetrag erhöht, was die verlagerbare Lagerung des Pipettierkanals am Führungsgestell längs der Verlagerungsachse stabilisiert.

Vorliegend soll zur Erleichterung der Beschreibung der erfindungsgemäßen Pipettiervorrichtung deren Arbeitsebene herangezogen werden. Die Arbeitsebene ist jene Ebene einer Pipettiervorrichtung, auf welcher Behälter bereitgestellt werden, an denen Pipettiervorgänge ausgeführt werden sollen. Üblicherweise ist ein Pipettierkanal in einer Ebene parallel zur Arbeitsebene beweglich, um unterschiedliche Behälter anfahren zu können und ist orthogonal zur Arbeitsebene beweglich, um in einen bereitgestellten Behälter eintauchen und aus diesem ausfahren zu können. Die genannte Verlagerungsachse ist eine Bewegungsrichtung parallel zur Arbeitsebene. Die Arbeitsebene dient daher nachfolgend als Bezugsebene zur Beschreibung der Pipettiervorrichtung und der daran realisierten Beweglichkeiten und Erstreckungen.

In der Regel kragt der Pipettierkanal von den beiden Linearführungsschienen in im Wesentlichen einer prominenten Richtung aus, sodass bei Beschleunigung des Pipettierkanals nicht nur ein dynamisches Moment um eine zur oben genannten Verlagerungsachse orthogonale und zu der Arbeitsebene der Pipettiervorrichtung parallele Momentenachse an den Lagerbauteilen abgestützt werden muss, sondern auch ein dynamisches Moment um eine zur Arbeitsebene orthogonale zweite Momentenachse abgestützt werden muss. Diese letztgenannte Abstützung wird durch den beschriebenen Versatz verbessert. Auch durch das zweite genannte dynamische Moment auftretende Verklemmungen oder Bewegungsstörungen in der Bewegungsführung des Pipettierkanals zur Verlagerung längs der Verlagerungsachse können so minimiert oder gar vollständig beseitigt werden.

In der vorliegenden Anmeldung wird der Begriff "Dynamik" vorrangig als die Lehre von durch Bewegung bewirkten Kräften und Momenten sowie von durch Kräfte und Momente bewirkter Bewegung verstanden.

Die Versatzachse ist vorzugsweise nicht-parallel zur Kanalachse. Bevorzugt ist die Versatzachse orthogonal zur Kanalachse. Die Versatzachse, die Verlagerungsachse und die Kanalachse bilden somit bevorzugt drei jeweils paarweise zueinander orthogonale, linear voneinander unabhängige Achsen eines kartesischen Koordinatensystems, von welchem die Versatzachse und die Verlagerungsachse bevorzugt parallel zur Arbeitsebene der Pipettiervorrichtung verlaufen.

Da der Abstand der Lagerbauteile längs der Verlagerungsachse für eine Vermeidung eines unerwünschten "Schubladeneffekts" längs der Verlagerungsachse entscheidender ist als der Versatz der Lagerbauteile längs der Versatzachse, ist bevorzugt der Versatz zwischen dem ersten und dem zweiten Lagerbauteil längs der Versatzachse betragsmäßig kleiner als der Abstand zwischen dem ersten und dem zweiten Lagerbauteil längs der Verlagerungsachse. Um die zusätzliche Bauraumanforderung an das Führungsgestell aufgrund der längs der Versatzachse mit Abstand voneinander angeordneten Lagerbauteile in Grenzen zu halten, ist außerdem bevorzugt vorgesehen, dass der Abstand zwischen dem ersten und dem zweiten Lagerbauteil betragsmäßig kleiner ist als die Entfernung der ersten und der zweiten Linearführungsschiene voneinander.

Um die oben geschilderte vorteilhafte Erreichbarkeit eines beliebigen Punktes innerhalb der Arbeitsebene der Pipettiervorrichtung gewährleisten zu können, ist gemäß einer bevorzugten Weiterbildung der vorliegenden Erfindung daran gedacht, dass das Führungsgestell längs einer sowohl zur Verlagerungsachse nicht-parallelen als auch zur Kanalachse nicht-parallelen Verfahrachse verfahrbar ist. Bevorzugt ist die Verfahrachse zur Verlagerungsachse ebenso orthogonal wie zur Kanalachse. Dann ist die Verfahrachse parallel zur Versatzachse.

Das Führungsgestell kann daher selbst wiederum relativ zu einem Vorrichtungsgestell auf einer an sich bekannten Linearführungseinrichtung längs der Verfahrachse verfahrbar gelagert sein.

Bevorzugt ist ein Pipettierkanal in jeder seiner möglichen voneinander linear unabhängigen Bewegungsrichtungen unabhängig von einer Bewegung in die jeweils anderen Bewegungsrichtungen zur Bewegung antreibbar.

Zur Verringerung der Anzahl an unterschiedlichen Bauteilen in der Pipettiervorrichtung sind bevorzugt das erste und das zweite Lagerbauteil identisch ausgebildet. Ebenso bevorzugt sind diese jedoch nicht identisch orientiert am Führungsgestell vorgesehen. Bevorzugt sind das erste und das zweite Lagerbauteil relativ zueinander entweder
um eine zur Verlagerungsachse orthogonale und zu der Arbeitsebene der Pipettiervorrichtung parallele Drehachse um 180° verdreht
   oder
um eine zur Verlagerungsachse parallele Drehachse um 180° verdreht angeordnet.

Somit kann beispielsweise das eine Lagerbauteil aus erstem und zweitem Lagerbauteil auf der ihm zugeordneten Führungsschiene stehend angeordnet sein. Das jeweils andere Lagerbauteil kann an der ihm zugeordneten anderen Führungsschiene hängend angeordnet sein. Auf diese Weise kann die Lagerung des Pipettierkanals entgegengesetzt gerichtete Kräfte hervorragend aufnehmen, da stets ein Lagerbauteil so angeordnet sein kann, dass die jeweils auftretende Kraft als Druckkraft wirkt, welche das Lagerbauteil zu der ihn führenden Linearführungsschiene hin drückt. Dies gilt bevorzugt für entgegengesetzt gerichtete Kräfte, deren Kraftwirkungsrichtung orthogonal zu der oben als Bezugsebene genannte Arbeitsebene orientiert ist.

Zur Kopplung des ersten und des zweiten Lagerbauteils zur gemeinsamen Verlagerungsbewegung längs der Verlagerungsachse miteinander weist die Pipettiervorrichtung erfindungsgemäß eine Halterungsanordnung auf, welche das erste und das zweite Lagerbauteil miteinander verbindet und an welcher der Pipettierkanal längs seiner Kanalachse verstellbar aufgenommen ist.

Die Lagerung der Pipettiervorrichtung zur Bewegung längs der Verlagerungsachse ermöglicht, wie eingangs dargelegt wurde, sehr hohe Beschleunigungen und Bewegungsgeschwindigkeiten. Um diesen Vorteil nutzen zu können, weist die Pipettiervorrichtung vorzugsweise einen linearmotorischen Antrieb für die Verlagerung des Pipettierkanals auf. Konstruktiv kann dies dadurch realisiert sein, dass das Führungsgestell einen Stator eines Linearmotors mit einer Magnetanordnung aufweist und dass die Halterungsanordnung einen Läufer des Linearmotors mit einer Spulenanordnung aufweist. Der Stator mit der Magnetanordnung verläuft dabei ebenfalls längs der Verlagerungsachse. Die Spulenanordnung ist bestrombar.

Um möglichst unabhängig von einer Energieversorgung zu sein, umfasst die Magnetanordnung bevorzugt eine Reihe von Permanentmagneten, welche längs der Verlagerungsachse mit alternierender Polarität aufeinander folgend angeordnet sind. Die Permanentmagnete sind dabei vorzugsweise derart polarisiert, dass ihr einer Pol zu der vom Läufer durchfahrenen Strecke hin und ihr entgegengesetzter anderer Pol von dieser Strecke weg weist.

Zur Erzielung lokal hoher Feldstärken in der vom Läufer durchfahrenen Strecke weist die Magnetanordnung besonders bevorzugt eine Jochanordnung auf, bei welcher zwei parallele, längs der Verlagerungsachse verlaufende Reihen von Permanentmagneten mit einem Spaltabstand voneinander entfernt angeordnet sind. In dem zwischen den beiden Reihen von Permanentmagneten gebildeten Spalt verfährt der diesem Stator zugeordnete Läufer des Pipettierkanals. In Spaltabstandsrichtung liegen bei dieser Jochanordnung bevorzugt ungleichnamige Magnetpole einander gegenüber, sodass Feldlinien der Magnetanordnung den vom Läufer durchfahrenen Spalt möglichst orthogonal durchsetzen. Auch hier sind in jeder der parallelen Magnetanordnungen Permanentmagnete mit alternierender Polanordnung angeordnet. Der Stator weist daher in einer zur Verlagerungsachse orthogonalen Schnittebene bevorzugt einen U-förmigen Querschnitt auf, wobei je eine der beiden parallelen Magnetanordnungen an je einem freien Schenkel des U-Profils angeordnet ist.

Die Pipettiervorrichtung weist zur synchronen Erledigung von Pipettieraufgaben vorzugsweise einen weiteren Pipettierkanal auf, welcher sich längs einer zur Kanalachse des Pipettierkanals parallelen weiteren Kanalachse erstreckt. Um den Pipettierkanal und den weiteren Pipettierkanal längs der Verlagerungsachse möglichst nahe aneinander annähern zu können, weist das Führungsgestell bevorzugt eine dritte und eine vierte Linearführungsschiene auf, welche parallel zueinander längs der Verlagerungsachse verlaufen und mit Entfernung voneinander vorgesehen sind. Die dritte und die vierte Linearführungsschiene sind von der ersten und der zweiten Linearführungsschiene verschieden, jedoch zu diesen parallel. Der weitere Pipettierkanal ist dann mit einem dritten Lagerbauteil an der dritten Linearführungsschiene und mit einem vierten Lagerbauteil an der vierten Linearführungsschiene längs der Verlagerungsachse verlagerbar geführt. Um den eingangs beschriebenen Vorteil einer stabilen Lagerung auch für den weiteren Pipettierkanal erzielen zu können, sind das dritte und das vierte Lagerbauteil längs der Verlagerungsachse mit Abstand voneinander angeordnet.

Grundsätzlich gilt das oben zum Pipettierkanal Gesagte mutatis mutandis auch für den weiteren Pipettierkanal, mit der Maßgabe, dass an die Stelle der ersten Linearführungsschiene die dritte Linearführungsschiene tritt, an die Stelle der zweiten Linearführungsschiene die vierte Linearführungsschiene tritt, an die Stelle des ersten Lagerbauteils das dritte Lagerbauteil tritt und an die Stelle des zweiten Lagerbauteils das vierte Lagerbauteil tritt.

Vorzugsweise ist der Abstand zwischen drittem und viertem Lagerbauteil längs der Verlagerungsachse betragsmäßig gleich dem Abstand zwischen erstem und zweitem Lagerbauteil längs der Verlagerungsachse. Dann können der Pipettierkanal und der weitere Pipettierkanal einander möglichst nahe angenähert werden, wobei die Lagerbauteile längs der Verlagerungsachse eine größere Abmessung haben können als die Pipettierkanäle selbst, da die Lagerbauteile des Pipettierkanals und die Lagerbauteile des weiteren Pipettierkanals auf unterschiedlichen Linearführungsschienen geführt sind und somit nicht miteinander kollidieren können.

Bevorzugt sind alle Lagerbauteile des Führungsgestells baugleich.

Um möglichst gleiche dynamische Verhältnisse am Pipettierkanal und am weiteren Pipettierkanal zu erhalten, ist bevorzugt die Entfernung zwischen der ersten und der zweiten Führungsschiene betragsmäßig gleich der Entfernung zwischen der dritten und der vierten Führungsschiene.

Ebenso ist zur Sicherstellung gleicher Bewegungs- und Lagerungsverhältnisse an Pipettierkanal und weiterem Pipettierkanal bevorzugt, wenn die Entfernung zwischen der ersten und der dritten Führungsschiene betragsmäßig gleich der Entfernung zwischen der zweiten und der vierten Führungsschiene ist und dass die Entfernung zwischen der ersten und der vierten Führungsschiene betragsmäßig gleich der Entfernung zwischen der zweiten und der dritten Führungsschiene ist. Dies lässt sich konstruktiv einfach beispielsweise dadurch realisieren, dass die erste bis vierte Führungsschiene Kanten einer Mantelumfangsfläche eines Quaders bilden. In diesem Falle ist die kürzeste Entfernung zwischen erster und zweiter Linearführungsschiene bevorzugt schräg zur Arbeitsebene orientiert, sodass die erste und die zweite Führungsschiene, ebenso wie, wenn vorhanden, die dritte und die vierte Führungsschiene, zum einen in einer Richtung orthogonal zur Arbeitsebene voneinander entfernt sind und zum anderen auch in einer Richtung parallel zur Arbeitsebene und orthogonal zur Verlagerungsachse voneinander entfernt sind. Eine kompakte Anordnung der Führungsschienen wird dann erhalten, wenn die erste und die vierte Linearführungsschiene einerseits und die dritte und die zweite Linearführungsschiene andererseits in Richtung orthogonal zur Arbeitsebene jeweils genau untereinander angeordnet sind und wenn die erste und die dritte Linearführungsschiene einerseits und die zweite und die vierte Linearführungsschiene andererseits in einer Richtung parallel zur Arbeitsebene jeweils genau nebeneinander angeordnet sind. Dies führt zur oben genannten Anordnung der Linearführungsschienen an den Kantenlinien einer Mantelumfangsfläche eines imaginären Quaders.

Dabei ist bevorzugt die Entfernung zwischen den übereinander angeordneten Schienen in Richtung orthogonal zur Arbeitsebene größer als die Entfernung von parallel zur Arbeitsebene nebeneinander angeordneten Linearführungsschienen.

Analog zum Pipettierkanal kann der weitere Pipettierkanal eine weitere Halterungsanordnung aufweisen, welche das dritte und das vierte Lagerbauteil miteinander verbindet und an welcher der weitere Pipettierkanal längs seiner weiteren Kanalachse verstellbar aufgenommen ist. Dies führt zu im Wesentlichen gleichen Steifigkeiten der längs der Verlagerungsachse verlagerbaren Funktionseinheiten: Pipettierkanal und weiterer Pipettierkanal.

Zur Erleichterung der Herstellung und der Montage der Pipettiervorrichtung kann die Halterungsanordnung erfindungsgemäß eine Trägeranordnung aufweisen, welche zwei an unterschiedlichen Führungsschienen geführte Lagerbauteile miteinander verbindet. Die weitere Halterungsanordnung kann ebenfalls eine Trägeranordnung aufweisen, welche zwei an unterschiedlichen Führungsschienen geführte Lagerbauteile miteinander verbindet. Weiter können die Halterungsanordnung und die weitere Halterungsanordnung eine gesondert von der Trägeranordnung ausgebildete und mit dieser zur gemeinsamen Verlagerungsbewegung verbundene Verstellanordnung aufweisen, an welcher der jeweilige Pipettierkanal längs der Kanalachse verstellbar aufgenommen ist. Die Trägeranordnung koppelt dabei erfindungsgemäß die zu einem jeweiligen Pipettierkanal gehörenden Lagerbauteile miteinander und ermöglicht die Anbringung einer Verstellanordnung daran.

Da die Verstellanordnungen zusammen mit einer in der Regel gemeinsamen Steuervorrichtung aller Funktionseinheiten: Pipettierkanal und weiterer Pipettierkanal, einen wesentlichen Beitrag zur Verstellbarkeit der Funktionseinheiten längs der jeweiligen Kanalachse leistet, ist es gerade im Hinblick auf die Verwendung einer gemeinsamen Steuervorrichtung vorteilhaft, wenn die Verstellanordnungen der Halterungsanordnung und der weiteren Halterungsanordnung im Wesentlichen identisch ausgebildet und relativ zum Führungsgestell identisch orientiert angeordnet sind. Aufgrund der identischen Ausbildung und auch der identischen Orientierung relativ zum Führungsgestell können beispielsweise für alle Verstellanordnungen die gleichen Steueralgorithmen verwendet werden.

Die Trägeranordnungen von Pipettierkanal und weiterem Pipettierkanal können ebenfalls identisch ausgebildet sein, was die Anzahl an benötigten unterschiedlichen Bauteilen für die Herstellung der Pipettiervorrichtung weiter verringert. Es kann dann ausreichen, die konstruktiv identisch ausgebildeten Trägeranordnungen lediglich für Pipettierkanal einerseits und weiteren Pipettierkanal andererseits relativ zueinander unterschiedlich orientiert anzuordnen.

Bevorzugt sind die Trägeranordnungen der Halterungsanordnung einerseits und der weiteren Halterungsanordnung andererseits relativ zueinander
um eine zur Verlagerungsachse orthogonale und zu der Arbeitsebene der Pipettiervorrichtung parallele Drehachse um 180° verdreht
   oder/und
um eine zu der Arbeitsebene der Pipettiervorrichtung orthogonale Drehachse um 180° verdreht
angeordnet. Dies ist beispielsweise dann möglich, wenn die vier Führungsschienen, wie oben dargelegt, längs der Kanten eines Quaders verlaufen. Dann ist der Pipettierkanal an dem einen Paar von sich diagonal durch den imaginären Quader gegenüberliegenden Linearführungsschienen geführt und der weitere Pipettierkanal an dem jeweils anderen Paar von sich diagonal gegenüberliegenden Linearführungsschienen.

Die obige Definition der Relativanordnung der Trägeranordnungen der Halterungsanordnung einerseits und der weiteren Halterungsanordnung andererseits zueinander gilt für den überragend bevorzugten Fall, dass die vier Führungsschienen, wie oben dargelegt, längs der Kanten der Mantelumfangsfläche eines Quaders verlaufen und zwei Seiten der Mantelumfangsfläche des Quaders parallel zur Arbeitsfläche und zwei weitere Seiten derselben orthogonal zur Arbeitsfläche orientiert sind.

Für den weitaus weniger bevorzugten Fall, dass keine der vier Seiten der Mantelumfangsfläche des imaginären, durch die vier Linearführungsschienen definierten Quaders parallel oder orthogonal zur Arbeitsfläche orientiert ist, können dennoch die Trägeranordnungen der Halterungsanordnung einerseits und der weiteren Halterungsanordnung andererseits als Gleichteile ausgestaltet sein, wenn diese relativ zueinander um eine zu einem Paar von parallelen Seiten der Mantelumfangsfläche des imaginären, durch die vier Linearführungsschienen definierten Quaders orthogonale Drehachse um 180° verdreht angeordnet sind. Auf die Orientierung der Arbeitsebene relativ zu den Linearführungsschienen kommt es dann nicht an.

Die Trägeranordnung weist vorzugsweise zwischen Verbindungsformationen zur Verbindung mit den jeweiligen Lagerbauteilen eine Anordnungsformation zur Anordnung einer Verstellanordnung daran auf. Diese Anordnungsformation ist bevorzugt derart symmetrisch, dass bezüglich einer Drehung um 180° um eine der oben im Zusammenhang mit den Trägeranordnungen genannten Drehachsen invariant ist, um ungeachtet von der jeweiligen Orientierung der an Linearführungsschienen geführten Trägeranordnung stets eine Anbringung einer Verstellanordnung in der gleichen Orientierung relativ zum Führungsgestell zu ermöglichen. Bevorzugt ist - bei Betrachtung der fertig montierten Pipettiervorrichtung - der Abstand zwischen zwei ein und dieselbe Trägeranordnung führenden Linearführungsschienen orthogonal zur Arbeitsebene kleiner als der Abstand zwischen den Verbindungsformationen der Trägeranordnung zur Verbindung derselben mit den beiden sie führenden Lagerbauteilen. Dies ermöglicht beispielsweise die Anordnung wenigstens eines Stators eines linearmotorischen Verlagerungsantriebs im Bereich zwischen je zwei in einer zur Arbeitsebene orthogonalen Richtung mit Abstand voneinander angeordneten Führungsschienen. Bevorzugt ist der wenigstens eine Stator innerhalb des imaginären, von den Führungsschienen definierten Quaders angeordnet.

Um auch den weiteren Pipettierkanal mit hoher Beschleunigung und Geschwindigkeit zur Bewegung längs der Verlagerungsachse antreiben zu können, umfasst folglich das Führungsgestell bevorzugt einen weiteren Stator eines weiteren Linearmotors mit einer weiteren Magnetanordnung. Die weitere Halterungsanordnung umfasst einen weiteren Läufer des Linearmotors mit einer weiteren Spulenanordnung. Auch dieser weitere Stator verläuft längs der Verlagerungsachse und ist orthogonal zur Verlagerungsachse mit Abstand vom oben genannten Stator angeordnet.

Wiederum sind bevorzugt der Stator mit der Magnetanordnung einerseits und der weitere Stator mit der weiteren Magnetanordnung andererseits im Wesentlichen identisch ausgebildet. Insbesondere sind beide Statoren als Joch mit dem oben beschriebenen U-förmigen Querschnitt ausgebildet, wobei zur erleichterten Montage der Pipettiervorrichtung die Statoren dann bevorzugt so angeordnet sind, dass die Spalte der Statoren mit je zwei einander gegenüberliegenden Magnetreihen komplanar angeordnet sind, wobei bevorzugt der Stator und der weitere Stator mit der Jochöffnung aufeinander zu weisen und mit dem Jochboden voneinander weg weisen.

Bevorzugt sind sowohl der Stator als auch der weitere Stator im Bereich zwischen je zwei in einer zur Arbeitsebene orthogonalen Richtung mit Abstand voneinander angeordneten Führungsschienen, besonders bevorzugt innerhalb des imaginären, von den Führungsschienen definierten Quaders angeordnet.

Die Verwendung von Gleichteilen zur Ausbildung von Stator und weiterem Stator ist beispielsweise dadurch möglich, dass der Stator und der weitere Stator in ihrer Orientierung relativ zueinander
entweder
um eine zur Verlagerungsachse orthogonale und zu einer Arbeitsebene der Pipettiervorrichtung, auf welcher Behälter für Pipettiervorgänge bereitgestellt werden, parallele Drehachse um 180° verdreht
   oder
um eine zur Verlagerungsachse parallele Drehachse um 180° verdreht
angeordnet sind. Auch diese Angabe gilt für den bevorzugten Fall dass die vier Linearführungsschienen die Kanten einer Mantelumfangsfläche eines Quaders definieren und zwei Seiten der Mantelumfangsfläche parallel zur Arbeitsebene orientiert sind. Bei beliebiger Orientierung der Mantelumfangsfläche können der Stator und der weitere Stator als Gleichteile in ihrer Orientierung relativ zueinander um eine zu einem Paar von parallelen Seiten der Mantelumfangsfläche des Quaders orthogonale Drehachse um 180° verdreht angeordnet sein.

Beide durch Relativverdrehung definierten Orientierungen relativ zueinander sind möglich. Je nach Ausgestaltung der Magnetanordnung des jeweiligen Stators bzw. weiteren Stators sind die beiden unterschiedlichen Relativanordnungen voneinander nicht unterscheidbar. Dies gilt beispielsweise dann, wenn Stator und weiterer Stator bezüglich einer zur Verlaufsrichtung orthogonalen Längsmittelebene spiegelsymmetrisch ausgebildet sind.

Ein Problem kann dabei der Läufer des Linearmotors darstellen, welcher mit dem Pipettierkanal zur gemeinsamen Verlagerung längs der Verlagerungsachse gekoppelt ist. Entsprechendes gilt für den weiteren Läufer des weiteren Pipettierkanals. In der Regel weist ein Läufer ebenso wie ein weiterer Läufer eine Mehrzahl von Spulen auf, bevorzugt wenigstens drei Spulen, welche längs der Verlaufsachse aufeinander folgend angeordnet sind. Zwar können sich die Spulen theoretisch wenigstens teilweise überlappen, jedoch ist es zur Erzielung eines möglichst dünnen Läufers vorteilhaft, wenn die Spulen vollständig nebeneinander, also bei fertig montierter Pipettiervorrichtung längs der Verlaufsachse aufeinander folgend angeordnet sind. Dann ist jedoch die Abmessung eines Läufers längs der Verlaufsachse in der Regel größer als die Abmessung des mit dem Läufer zur gemeinsamen Bewegung gekoppelten Pipettierkanals. Für den weiteren Pipettierkanal gilt das gleiche.

Zur Erhöhung des Anteils an Gleichteilen bei der Herstellung der Pipettiervorrichtung sind wiederum der Läufer mit der Spulenanordnung einerseits und der weitere Läufer mit der weiteren Spulenanordnung andererseits bevorzugt konstruktiv identisch ausgebildet. Um aufgrund der oben geschilderten Abmessungen jedoch bei Annäherung des Pipettierkanals und des weiteren Pipettierkanals längs der Verlaufsachse aneinander eine Kollision der Läufer zu vermeiden und so eine stärkere Annäherung von Pipettierkanal und weiterem Pipettierkanal zu ermöglichen, sind der Läufer und der weitere Läufer bevorzugt in ihrer Orientierung relativ zueinander um eine zur Verlagerungsachse orthogonale und zu der Arbeitsebene parallele Drehachse - oder ganz allgemein um eine zu einem Paar von parallelen Seiten der durch die Linearführungsschienen definierten Mantelumfangsfläche des Quaders orthogonale Drehachse - um 180° verdreht angeordnet.

Bevorzugt weist somit die Trägeranordnung eine Montageformation zur Anbringung eines Läufers daran auf.

Da die relative Orientierung von Läufer und weiterem Läufer zueinander der Orientierung von Trägeranordnung und weiterer Trägeranordnung entspricht, ist zur Erleichterung der Montage der erfindungsgemäßen Pipettiervorrichtung bevorzugt jeder Läufer bzw. jedes Läuferbauteil in identischer Weise an eine Trägeranordnung montiert. Dann bestimmt die Orientierung der Trägeranordnung relativ zum Führungsgestell, ob das anmontierte Läuferbauteil ein Läufer oder ein weiterer Läufer ist, je nachdem, ob er mit dem Stator oder mit dem weiteren Stator zur Erzeugung einer elektromagnetischen Beschleunigungskraft zusammenwirkt.

Jeder Läufer bzw. weitere Läufer ist über eine Mehrzahl von elektrischen Leitungen mit unterschiedlichen Phasen einer Spannungsquelle gekoppelt und wird durch die oben genannte Steuervorrichtung angesteuert. Die Steuervorrichtung kann ein Computer oder eine speicherprogrammierbare Steuerung sein. Dadurch, dass der Läufer und der weitere Läufer durch die Steuervorrichtung gesondert voneinander bestromt werden können, sind der Pipettierkanal und der weitere Pipettierkanal unabhängig voneinander längs der Verlagerungsachse verlagerbar.

Die vorliegend beschriebene erfindungsgemäße Pipettiervorrichtung kann mehr als nur einen Pipettierkanal aufweisen und kann mehr als nur einen weiteren Pipettierkanal aufweisen. Mit zunehmender Anzahl von Funktionseinheiten in Form von Pipettierkanälen und weiteren Pipettierkanälen steigt die Anzahl an gleichzeitig ausführbaren Pipettiervorgängen. Daher kann die Pipettiervorrichtung bevorzugt eine Mehrzahl von Funktionseinheiten in Form von Pipettierkanälen und weiteren Pipettierkanälen aufweisen. Zur Erzielung einer möglichst guten Annäherbarkeit der Funktionseinheiten aneinander - gewünscht ist hier eine Annäherung der Kanalachsen benachbarter Funktionseinheiten von wenigstens 9 mm - gilt längs der Verlaufsachse mit Ausnahme der endseitigen Funktionseinheiten für eine Mehrzahl von Funktionseinheiten, dass ein Pipettierkanal zwischen zwei weiteren Pipettierkanälen und ein weiterer Pipettierkanal zwischen zwei Pipettierkanälen angeordnet ist. Bevorzugt gilt dies für alle übrigen Funktionseinheiten mit Ausnahme der endseitigen Funktionseinheiten, also mit Ausnahme des längs der Verlagerungsachse ersten und letzten Pipettierkanals bzw. weiteren Pipettierkanals, je nachdem, ob die Pipettiervorrichtung eine gerade oder ungerade Anzahl von Funktionseinheiten: Pipettierkanälen und weiteren Pipettierkanälen, aufweist.

Die vorliegende Erfindung wird nachfolgend anhand der beiliegenden Zeichnungen näher erläutert. Es stellt dar:
- Figur 1: eine grobschematische perspektivische Ansicht einer erfindungsgemäßen Ausführungsform einer Pipettiervorrichtung von oben und vorne,
- Figur 2: die Pipettiervorrichtung von Figur 1 bei Betrachtung längs der Verlagerungsachse,
- Figur 3: die Pipettiervorrichtung der Figuren 1 und 2 in perspektivischer Darstellung, jedoch ohne Verkleidung, bei Betrachtung von oben und hinten,
- Figur 4: die Pipettiervorrichtung von Figur 1, jedoch ohne Führungsgestell, nur mit Linearführungsschienen und daran mittels Lagerbauteilen geführten Halterungsanordnungen und Pipettierkanälen, bei Betrachtung längs der Verfahrachse,
- Figur 5: die Darstellung von Figur 4 in perspektivischer Ansicht von oben und hinten und
- Figur 6: die Pipettiervorrichtung von Figur 3 mit alternativ dargestellter Linearführungsanordnung zur Bewegung der Pipettierkanäle auch in Richtung der Verfahrachse.

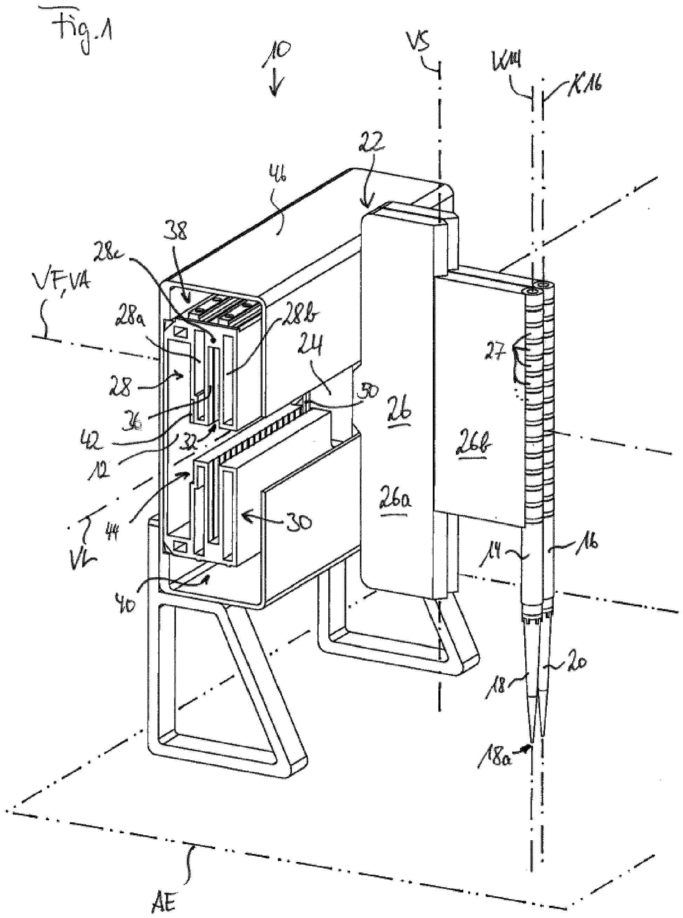

In den Figuren 1 bis 6 ist eine erfindungsgemäße Ausführungsform einer Pipettiervorrichtung der vorliegenden Anmeldung allgemein mit 10 bezeichnet.

Die Pipettiervorrichtung 10 umfasst ein Führungsgestell 12, an welchem in Figur 1 gezeigte Pipettierkanäle 14 und 16 längs einer Verlagerungsachse VL verfahrbar gelagert sind. Die Pipettierkanäle 14 und 16 sind im Wesentlichen identisch aufgebaut, sodass nachfolgende Angaben über einen Pipettierkanal für alle in der vorliegenden Ausführungsform gezeigten Pipettierkanäle gelten.

An den Pipettierkanälen 14 und 16 können in an sich bekannter Weise Pipettierspitzen 18 bzw. 20 lösbar aufgenommen sein.

Die Pipettierkanäle 14 und 16 erstrecken sich längs jeweiliger Kanalachsen K14 bzw. K16, welche bevorzugt orthogonal zur Verlagerungsachse VL orientiert sind.

Auf einer Arbeitsebene AE, welche in der vorliegenden Ausführungsform mit strichpunktpunktierter Linie angedeutet ist, werden üblicherweise in den Figuren nicht dargestellte und nicht zur Pipettiervorrichtung gehörende Behälter bereitgestellt, aus welchen Flüssigkeiten in die Pipettierspitzen 18 und 20 aufgenommen oder in welche Flüssigkeiten aus den Pipettierspitzen 18 und 20 abgegeben werden. Für die Aspiration oder Dispensation von Flüssigkeiten wird in an sich bekannter Weise in den Pipettierkanälen 14 und 16 der Druck eines Arbeitsmediums, in der Regel Luft, verändert, um über den so erzeugten Unterdruck bzw. Überdruck relativ zum Druck der umgebenden Atmosphäre Flüssigkeit in die jeweilige Pipettierspitze 18 oder/und 20 anzusaugen oder aus dieser auszustoßen.

Die Arbeitsebene AE ist im vorliegenden Beispiel parallel zur Verlagerungsachse VL und orthogonal zu den Kanalachsen K14 und K16.

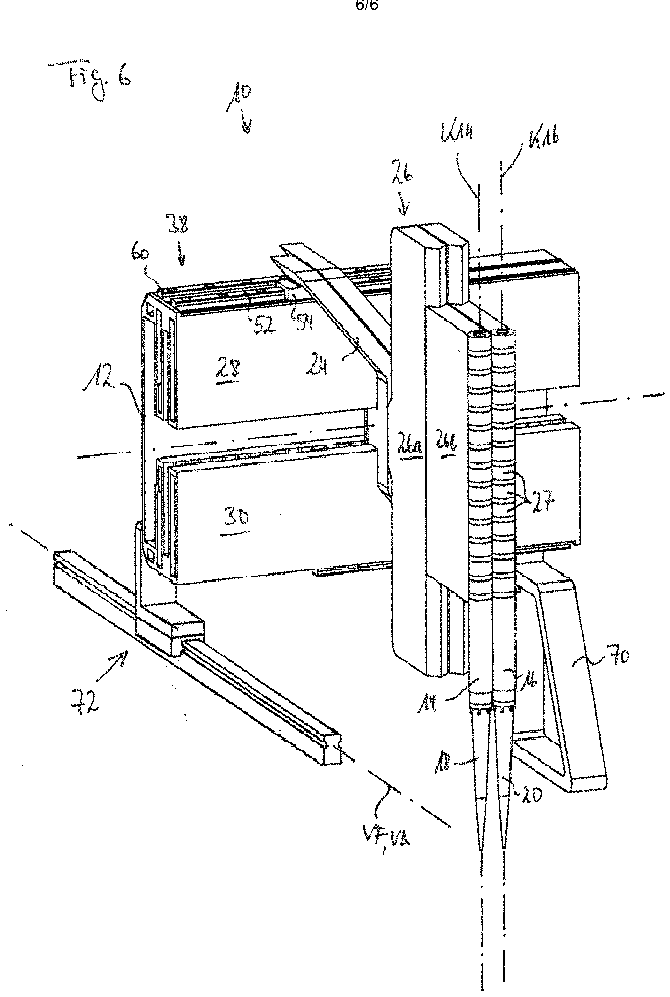

Die Pipettiervorrichtung 10 kann zu zusätzlich längs einer zur Arbeitsebene AE ebenfalls parallelen, jedoch zur Verlagerungsachse VL orthogonalen Verfahrachse VF verfahrbar angeordnet sein, wie dies beispielsweise in Figur 6 am dort linken Ende des Führungsgestells 12 angezeigt ist. Dann können die Pipettierkanäle 14 und 16 im Rahmen ihrer Bewegungsbereiche längs der zur Arbeitsebene AE parallelen Bewegungsachsen VL und VF einen beliebigen Punkt der Arbeitsebene AE ansteuern. Um beim Verfahren parallel zur Arbeitsebene AE nicht mit dort bereitgestellten Behältern zu kollidieren und dennoch in diese eintauchen zu können, sind die Pipettierkanäle 14 und 16 längs von zu den jeweiligen Kanalachsen K14 bzw. K16 parallelen Verstellachsen VS verstellbar. Die Bewegungsachsen VL, VF und VS bilden somit linear voneinander unabhängige Bewegungsachsen eines kartesischen Koordinatensystems, sodass eine Dosieröffnung 18a einer Pipettierspitze 18 im Rahmen der jeweiligen den Bewegungsachsen zugeordneten Bewegungsbereiche einen beliebigen Punkt in dem von den Bewegungsachsen VL, VF und VS aufgespannten Bewegungsraum anfahren kann. Für die Dosieröffnungen weiterer Pipettierspitzen 20 usw. gilt das für das Pipettierspitze 18 Gesagte entsprechend.

Der Pipettierkanal 14 - und im Übrigen alle weiteren Pipettierkanäle 16 usw. - der vorliegenden Pipettiervorrichtung 10 ist über eine Halterungsvorrichtung 22 längs der Verlagerungsachse VL verlagerbar am Führungsgestell 12 aufgenommen. Die Halterungsanordnung 22 umfasst im dargestellten Ausführungsbeispiel ein Trägerbauteil 24, welches längs der Verlagerungsachse VL verlagerbar am Führungsgestell 12 geführt ist, und eine mit der Trägeranordnung zur gemeinsamen Verlagerungsbewegung längs der Verlagerungsachse VL verbundene Verstellanordnung 26. Die Verstellanordnung 26 umfasst ein trägeranordnungsfestes erstes Bauteil 26a und ein relativ zu diesem am ersten Bauteil 26a längs der Verstellachse VS bewegliches zweites Bauteil 26b. Das zweite Bauteil 26b kann am ersten Bauteil 26a in an sich bekannter Weise zur Bewegung längs der Verstellachse VS geführt sein, beispielsweise durch eine sich längs der Verstellachse VS erstreckende Linearführungseinrichtung, und kann weiter zur Verstellbewegung in an sich bekannter Weise angetrieben sein, beispielsweise durch einen Spindeltrieb oder durch einen Linearmotor. Der Bewegungsantrieb zur Relativbewegung des zweiten Bauteils 26b relativ zum ersten Bauteil 26a längs der Verstellachse VS kann im ersten Bauteil 26a aufgenommen sein, ebenso kann die hierfür notwendige Steuerung teilweise oder vollständig im ersten Bauteil 26a aufgenommen sein. Das zweite Bauteil 26b kann die zur Veränderung des Drucks des Arbeitsmediums im zugeordneten jeweiligen Pipettierkanal notwendigen Einrichtungen teilweise oder vollständig aufweisen, wie beispielsweise eine entsprechende Steuerung. Der Pipettierkanal 14 kann beispielsweise einen ferromagnetischen und bevorzugt dauermagnetisierten Kolben aufweisen, welcher durch zur jeweiligen Kanalachse K14, K16 usw. konzentrische Spulen 27 zur Bewegung längs der Kanalachse K14 in einem Pipettierkanalrohr angetrieben sein. Die Bestromung der Antriebsspulen 27 kann durch die in dem ersten Bauteil 26a oder/und dem zweiten Bauteil 26b aufgenommene Steuerung gesteuert sein.

Die Pipettierkanäle 14, 16 usw. sind längs der Verlagerungsachse VL linearmotorisch zur Bewegung angetrieben, was hohe Beschleunigungen mit entsprechend hohen dynamischen Reaktionskräften ermöglicht. Die Produktivität solcher Pipettiervorrichtungen ist dadurch außerordentlich groß.

Das Führungsgestell 12 weist daher wenigstens einen Stator 28 auf. Genauer weist das Führungsgestell zwei Statoren, nämlich den Stator 28 und einen weiteren Stator 30 auf. Beide Statoren sind im Wesentlichen gleich ausgebildet und sind lediglich relativ zueinander verdreht und mit Abstand voneinander angeordnet. Beispielsweise können die beiden Statoren 28 und 30 durch Rotation um eine zur Verlagerungsachse VL parallele Drehachse um 180° theoretisch ineinander übergeführt werden, oder die beiden Statoren 28 und 30 können durch Relativverdrehung um eine zur Verfahrachse VF, also um eine zur Verlagerungsachse VL orthogonale und zur Arbeitsebene AE parallele Drehachse um 180° theoretisch ineinander übergeführt werden. Letzteres ist in der dargestellten Ausführungsform der Fall. Es reicht daher aus, nachfolgend den Stator 28 zu beschreiben. Dessen Beschreibung gilt unter der obigen Symmetriebedingung auch für den Stator 30 (theoretische Überführung durch Verdrehung um eine zur Verfahrachse VF parallele Drehachse um 180°).

Der Stator 28 ist - wie auch der Stator 30 - bevorzugt integral mit dem Führungsgestell ausgebildet, beispielsweise als Kunststoff-Strangpressprofil oder als Aluminium-Stranggussprofil. Der Stator 28 oder/und der Stator 30 können auch gesondert vom Führungsgestell ausgebildet und mit diesem mit geeigneten Verbindungsmitteln verbunden sein.

Der Stator 28 weist einen U-förmigen Querschnitt auf mit seinen zwei einander gegenüberliegenden Schenkeln 28a und 28b, welche durch eine Basis 28c miteinander verbunden sind. Die Schenkel 28a und 28b können zur Gewichtseinsparung als Hohlkörper ausgebildet sein. Zwischen den Schenkeln 28a und 28b des jochartigen Stators 28 ist ein Spalt 32 gebildet, in welchem der Läufer 34 in diesem Falle des Pipettierkanals 16 längs der Verlagerungachse VL verlagerbar läuft.

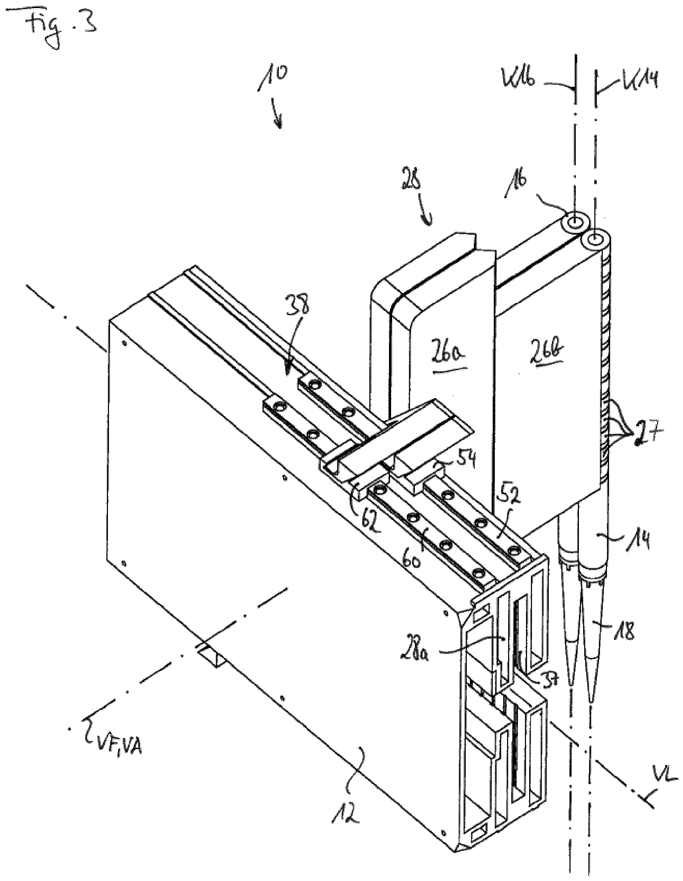

An den aufeinander zu weisenden Innenseiten der Jochschenkel 28a und 28b ist jeweils eine Magnetanordnung angeordnet, welche eine Reihe von längs der Verlagerungsachse VL aufeinander folgenden, alternierend polarisierten Permanentmagneten umfasst. Zu erkennen ist in Figur 1 lediglich die Magnetanordnung 36 des von den Pipettierkanälen 14 und 16 ferner liegenden Schenkels 28a. Dieser Magnetanordnung 36 liegt eine weitere Magnetanordnung 37 (siehe Figur 3) am Schenkel 28b gegenüber, und zwar derart, dass stets ungleichnamige Pole einander in Breitenrichtung des Spalts 32 einander gegenüberliegen. Die Permanentmagnete der Magnetanordnung 36 wie auch der gegenüberliegenden Magnetanordnung 37 sind derart angeordnet, dass ihre Polarisierungsrichtung ebenfalls in Richtung der Breite des Spalts 32 weist, d. h. einer der beiden Pole eines Permanentmagneten liegt stets gänzlich dem Spalt 32 näher und der jeweils andere, entgegengesetzte Pol liegt gänzlich dem Spalt 32 ferner. Auf diese Art und Weise durchsetzen Feldlinien zwischen den Magnetanordnungen 36 und 37 der beiden Statorschenkel 28a und 28b des jochartigen Stators 28 den Spalt 32 in dessen Breitenrichtung im Wesentlichen orthogonal, wobei sich die Feldrichtung entsprechend der Folge von mit alternierender Polarisation angeordnete Permanentmagneten längs der Verlagerungsachse VL mit jedem einander gegenüberliegenden Permanentmagnetenpaar umkehrt. Auf diese Weise kann ein hocheffizientes, dichtes Magnetfeld erzielt werden, in welchem der Läufer 34 hochgenau, sehr schnell und mit hoher Beschleunigung bewegt werden kann. Die Genauigkeit der Positionierung der Pipettierkanäle längs der Verlagerungsachse VL hängt weiter von der Polteilung der Magnetanordnung 36 und der ihr gegenüberliegenden Magnetanordnung 37 ab.

Auf der vom jeweils anderen Stator weg weisenden Seite eines Statorabschnitts des Führungsgestells 12 ist jeweils eine Anordnung 38 bzw. 40 mit einem Paar von Linearführungsschienen angeordnet. In Figur 1 ist nur die obere Anordnung 38 ausführlich dargestellt, die untere Anordnung 40 ist lediglich angedeutet.

Das Führungsgestell 12 kann außerdem einen Streckenmaßstab 42 aufweisen, welcher der Positionserfassung von Pipettierkanälen längs der Verlagerungsachse VL dient. Bevorzugt ist der Maßstab 42 ein absoluter Maßstab, sodass die Position eines Pipettierkanals unmittelbar ermittelbar ist. Es soll jedoch nicht ausgeschlossen sein, dass stattdessen ein inkrementeller Maßstab verwendet wird. Der Maßstab 42 ist bevorzugt in einer Anbringungsformation 44 angeordnet, in die er bevorzugt bündig passt. Im dargestellten Beispiel ist die Anbringungsformation 44 für die Anbringung des Streckenmaßstabs 42 auf der der Magnetanordnung 36 abgewandten Seite des Schenkels 28a des Stators 28 angeordnet. Entsprechendes gilt für den Stator 30 unter der oben genannten Symmetriebedingung. Die Anbringungsformation 44 könnte jedoch genauso gut auf der von den Magnetanordnungen weg weisenden Seite des Schenkels 28b oder an einer anderen Stelle des Führungsgestells 12 ausgebildet sein.

Da sich am Führungsgestell 12 zur Verlagerung längs der Verlagerungsachse VL geführte Pipettierkanäle nicht überholen können, reicht die Anordnung lediglich eines Streckenmaßstabs in nur einer Anbringungsformation aus. Das Führungsgestell 12 ist in dem dargestellten Beispiel von einer schalenförmigen Verkleidung 46 mit C-förmigem Querschnitt umgeben. Durch den Schlitz 48 der Verkleidung 46 hindurch erfolgt die mechanische Verbindung der Pipettierkanäle 14, 16 usw. mit den Läufern 34 bzw. 50. erfolgt die mechanische Verbindung der Pipettierkanäle 14, 16 usw. mit den Läufern 34 bzw. 50.

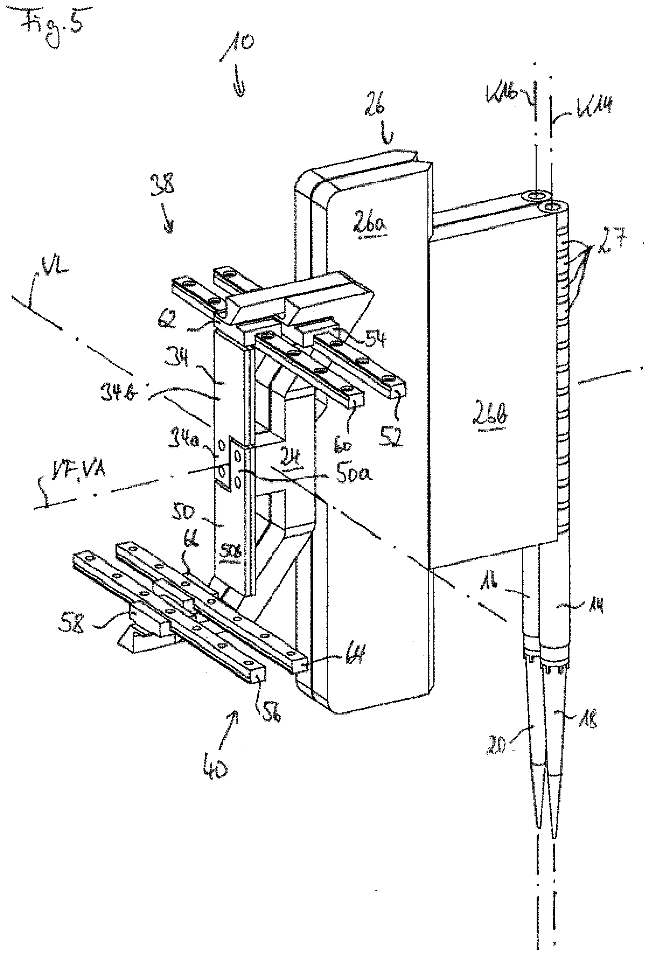

Wie besonders gut in Figur 5 zu erkennen ist, ist jeder Pipettierkanal an zwei Linearführungsschienen geführt, und zwar an je einer aus jeder Schienenanordnung 38 und 40. Die Linearführungsschienenanordnung 38 weist eine erste Linearführungsschiene 52 auf, an welcher ein Lagerbauteil 54 nur längs der Verlagerungsachse VL verlagerbar geführt ist.

Die Linearführungsschienenanordnung 40 weist eine zweite Linearführungsschiene 56 auf, an welcher ein zweites Lagerbauteil 58 nur längs der Verlagerungsachse VL verlagerbar geführt ist. Die Lagerbauteile 54 und 58 können beispielsweise Führungswagen mit Kugelumlaufreihen sein, welche reibungsarm, aber präzise an ihren jeweiligen Führungsschienen 52 und 56 geführt sind. Der Pipettierkanal 14 ist mit dem ersten Lagerbauteil 54 und mit dem zweiten Lagerbauteil 58 zur Verlagerung längs der Verlagerungsachse VL gelagert.

Die erste Linearführungsschienenanordnung 38 weist eine dritte Linearführungsschiene 60 auf, an welcher ein drittes Lagerbauteil 62 nur längs der Verlagerungsachse VL verlagerbar geführt ist. Ebenso weist die andere Linearführungsschienenanordnung 40 eine vierte Linearführungsschiene 64 auf, an welcher ein viertes Lagerbauteil 66 nur längs der Verlagerungsachse VL verlagerbar geführt ist. Der Pipettierkanal 16 ist mit dem dritten und vierten Lagerbauteil 62 bzw. 66 an der dritten bzw. vierten Linearführungsschiene 60 bzw. 64 zur Verlagerung längs der Verlagerungsachse VL geführt.

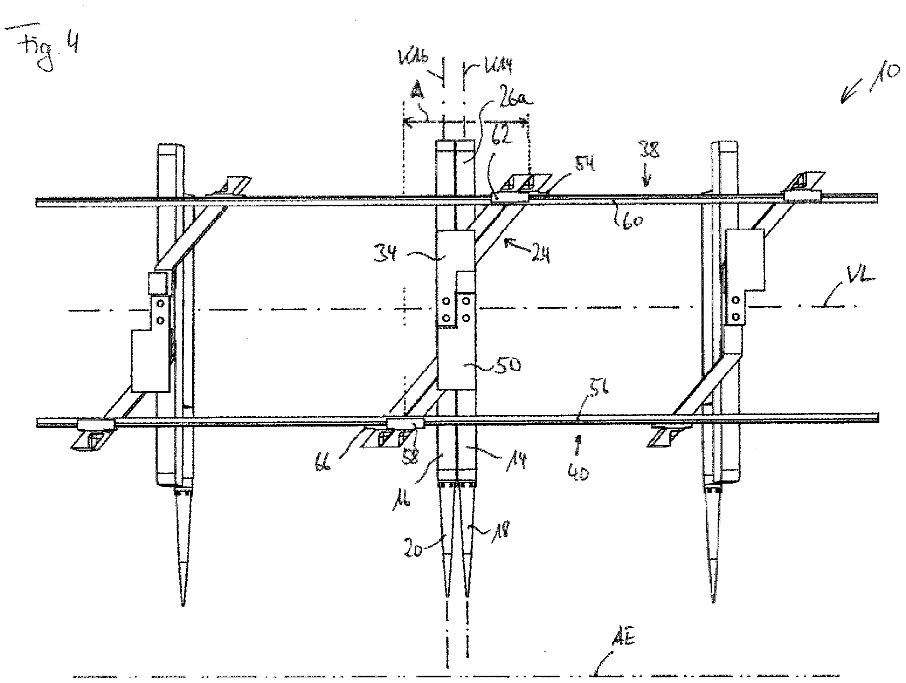

Die Trägeranordnung 24 des Pipettierkanals 14 umgreift dabei die erste und die zweite Linearführungsschiene 52 bzw. 56, was bei der Anordnung von Linearführungsschienen in dem gezeigten Ausführungsbeispiel auch das Umgreifen der vierten Linearführungsschiene 64 bedeutet. Die Trägeranordnung 24 des Pipettierkanals 14 verbindet erfindungsgemäß das erste und das zweite Lagerbauteil 54 bzw. 58 zur gemeinsamen Bewegung längs der Verlagerungsachse VL starr miteinander. Wie in Figur 4 zu erkennen ist, welche die Führungsschienenanordnungen 38 und 40 mit daran geführten Pipettierkanälen längs der Verfahrachse VF betrachtet zeigt, besteht zwischen den Lagerbauteilen 54 und 58, welche mit demselben Pipettierkanal 14 verbunden sind, längs der Verlagerungsachse VL ein Abstand A. Dadurch kann die Führungslänge des Pipettierkanals 14 längs der Verlagerungsachse VL erhöht werden, ohne dass hierfür der Pipettierkanal 14 oder die mit ihm zusammenhängende Halterungsanordnung 26 breiter als nötig ausgeführt werden müssen. Der Pipettierkanal 14 und die Halterungsanordnung 26 überschreiten in ihren Abmessungen in Richtung der Verlagerungsachse VL einen Wert von 9 mm nicht. Der Abstand A zwischen dem ersten und dem zweiten Lagerbauteil 54 bzw. 58 des Pipettierkanals 14 beträgt dagegen ein Vielfaches der Abmessung des Pipettierkanals 14 oder seiner Halterungsanordnung 26 in Richtung der Verlagerungsachse VL. Die beiden Lagerbauteile 54 und 58 sind von einer die Kanalachse K14 des Pipettierkanals 14 enthaltenden und zur Verlagerungachse VL orthogonalen Ebene betragsmäßig gleich weit entfernt, befinden sich jedoch auf unterschiedlichen Seiten dieser Ebene.

Die genannte Ebene ist aufgrund der Perspektive von Figur 4, bei welcher die Verfahrachse VF orthogonal zur Zeichenebene steht, ebenfalls orthogonal zur Zeichenebene, sodass sie mit der Linie der Kanalachse K14 zusammenfällt. Auch die Arbeitsebene AE ist in Figur 4 orthogonal zur Zeichenebene.

Da die das erste und das zweite Lagerbauteil 54 und 58 führenden Linearführungsschienen 52 und 56 längs einer mit der Verfahrachse VF zusammenfallenden Versatzachse VA zueinander versetzt sind, weisen die Lagerbauteile 54 und 58 auch längs dieser Versatzachse VA einen Versatz auf, welcher die Führungsstabilität des Pipettierkanals 14 bei seiner Bewegung längs der Verlagerungsachse VL erhöht.

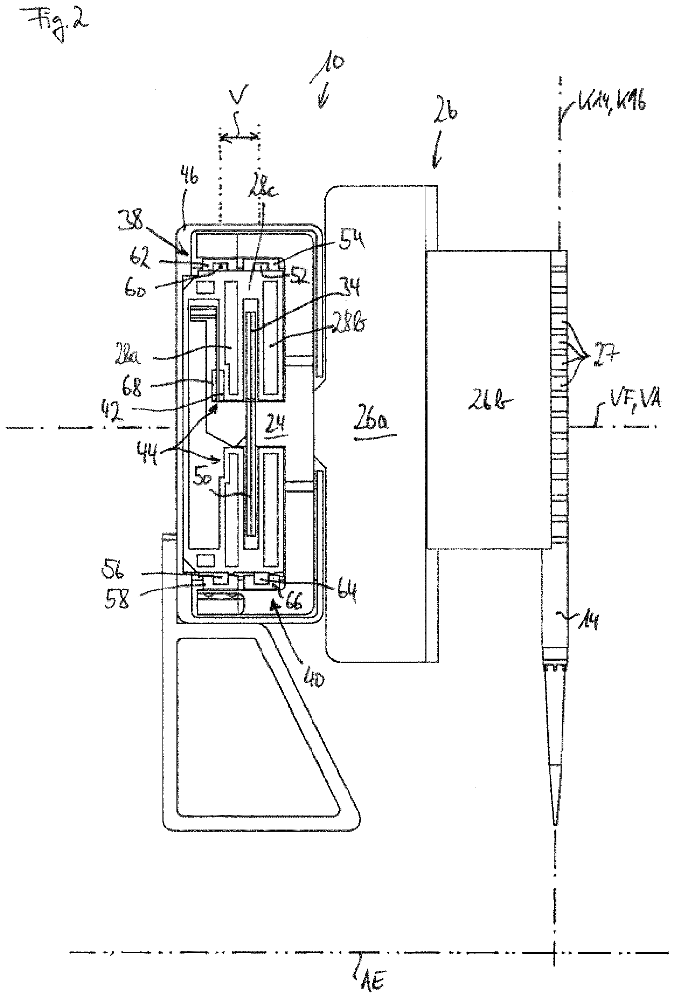

In Fig. 2 ist der Versatz V längs der Versatzachse VA zwischen dem ersten und dem zweiten Lagerbauteil 54 bzw. 58 gut zu erkennen. In Fig. 2 ist die Verlagerungsachse VL orthogonal zur Zeichenebene orientiert, ebenso wie die Arbeitsebene AE.

Die Lagerbauteile 54, 58, 62 und 66 sind identisch. Auch die Linearführungsschienen 52, 56, 60 und 64 sind zueinander identisch. Die Linearführungsschienen 52, 56, 60 orthogonal zu Verlagerungsachse VL und Verfahrachse VF größer ist als längs der Verfahrachse VF bzw. Versatzachse VA. Die Linearführungsschienen 52, 56, 60 und 64 bilden somit die Kanten einer Mantelumfangsfläche eines Quaders. Die Linearführungsschienen der Anordnung 38 einerseits und die Führungsschienen der Anordnung 40 andererseits sind derart symmetrisch angeordnet, dass die eine Anordnung durch Rotation um eine zur Verlagerungsachse VL parallele Drehachse um 180° theoretisch in die jeweils andere Anordnung überführbar ist. Ebenso sind die Linearführungsschienen wegen ihrer symmetrischen Ausführung durch eine Rotation um eine zur Verfahrachse VF parallele Drehachse um 180° theoretisch ineinander überführbar.

Die Trägeranordnungen 24 sind für alle Pipettierkanäle identisch ausgebildet, jedoch nicht identisch angeordnet. Die Trägeranordnung 24 des Pipettierkanals 14 kann durch Drehung um 180° um eine zur Verfahrachse VF parallele Drehachse zu einer Trägeranordnung 24 des Pipettierkanals 16 werden, und umgekehrt. An dieser Drehung können die mit der jeweiligen Trägeranordnung 24 verbundenen Lagerbauteile teilnehmen.

Bevorzugt sind jeweils zwei unmittelbar längs der Verlagerungsachse VL miteinander benachbarte Pipettierkanäle an einem unterschiedlichen Paar von Linearführungsschienen geführt. So ist der dem Pipettierkanal 14 längs der Verlagerungsachse VL unmittelbar benachbarte Pipettierkanal 16 an der dritten Linearführungsschiene 60 und an der vierten Linearführungsschiene 64 zur Bewegung längs der Verlagerungsachse VL geführt. Figur 4 zeigt zwei weitere Pipettierkanäle, einer jeweils dem Pipettierkanal 16 auf der dem Pipettierkanal 14 abgewandten Seite benachbart, und einer dem Pipettierkanal 14 auf der dem Pipettierkanal 16 abgewandten Seite benachbart. Für alle Pipettierkanäle der Pipettiervorrichtung 10, welche längs der Verlagerungsachse VL verlagerbar geführt sind, gilt die Bedingung, dass zwei einander unmittelbar längs der Verlagerungsachse VL benachbarte Pipettierkanäle auf unterschiedlichen Linearführungsschienen geführt sind, wobei jeder zweite Pipettierkanal stets an denselben beiden Linearführungsschienen geführt ist. Dadurch ist es möglich, die Lagerbauteile in Richtung längs der Verlagerungsachse VL länger als die von ihnen gelagerten Pipettierkanäle auszuführen, was zusätzliche Führungslänge längs der Verlagerungsachse VL bedeutet.

Wie Figur 5 zeigt, sind die Läufer 34 und 50 von zwei unmittelbar längs der Verlagerungsachse VL benachbarten Läufern identisch ausgeführt, jedoch nicht identisch an der Pipettiervorrichtung 10 angeordnet. Diese weisen einen schmalen Anbringungsabschnitt 34a bzw. 50a auf, welcher in Richtung der Verlagerungsachse VL nicht breiter ist als das gewünschte Rastermaß zwischen zwei einander maximal angenäherten Kanalachsen zweier unmittelbar benachbarter Pipettierkanäle. Weiter weisen die Läufer 34 und 50 einen Spulenabschnitt 34b bzw. 50b auf, in welchem eine Spulenanordnung aufgenommen ist, die bei Bestromung ein sich zeitlich änderndes Magnetfeld erzeugt, welches mit den Magnetanordnungen der Statoren 28 bzw. 30 wechselwirkt und somit eine Beschleunigung des jeweiligen Pipettierkanals längs der Verlagerungsachse VL bewirkt. Der Anbringungsabschnitt 34a und der Spulenabschnitt 34b weisen eine L-Gestalt auf, sodass sich die Läufer 34 und 50 von zwei längs der Verlagerungsachse VL unmittelbar benachbarten Pipettierkanälen bei größtmöglicher Annäherung aneinander zu einem im Wesentlichen geschlossenen Rechteck ergänzen können.

An einer Trägeranordnung 24 bzw. an einem daran angeordneten Läufer (siehe Läufer 50 in Figur 4) kann ein Sensor 68 vorgesehen sein, welcher mit dem Streckenmaßstab 42 zur Positionsbestimmung zusammenwirkt. Aus Symmetriegründen und aus Gründen der damit verbundenen vereinfachten Montage und Herstellung ist das Führungsgestell 12 mit den daran integral ausgebildeten Statoren 28 und 30 vorzugsweise spiegelsymmetrisch bezüglich einer zur Arbeitsebene AE parallelen Spiegelsymmetrieebene angeordnet. Damit weist das Führungsgestell zwei Anbringungsformationen 44 zur Anbringung des Streckenmaßstabs 42 auf, von welchen jedoch tatsächlich nur eine benötigt wird.

Figur 2 zeigt, dass eine Trägeranordnung 24 bei Betrachtung längs der Verlagerungsachse VL eine E-förmige Gestalt aufweist, deren oberer und unterer Schenkel zur Verbindung mit den Lagerbauteilen dient, deren mittlerer Schenkel zur Verbindung mit dem jeweiligen Läufer dient, und deren die Schenkel verbindende Basis der Verbindung mit der Verstellanordnung 26 dient. Der Mittelteil der die drei Schenkel verbindenden Basis ist dabei bevorzugt parallel zur Kanalachse K des jeweils mit der Trägeranordnung verbundenen Pipettierkanals orientiert, wohingegen ein oberer und ein unterer Bereich der Basis der Trägeranordnung 24 bezüglich der zugeordneten Kanalachse K geneigt ist, um den Abstand A der mit der Trägeranordnung 24 verbundenen Lagerbauteile bewirken zu können.

In Figur 6 ist zum einen gezeigt, dass die Pipettiervorrichtung nicht unbedingt ein Gehäuse 46 benötigt, welches das Führungsgestell 12 umgibt. Vielmehr kann das Führungsgestell 12 selbst unmittelbar entweder über ein Gestell 70 ortsfest ruhen oder über eine weitere Linearführungsanordnung 72 zur Bewegung längs der Verfahrachse VF geführt sein. Das Führungsgestell 12 kann selbst wiederum linearmotorisch oder mechanisch durch einen Spindeltrieb zur Bewegung längs der Verfahrachse VF angetrieben sein. Selbstverständlich kann das Führungsgestell 12 auch mit einem Gehäuse 46 mit einer Linearführungsanordnung 72 verfahrbar ausgebildet sein.

Mit der vorliegenden Erfindung wird eine hochdynamische äußerst schnell und präzise bewegliche und damit hochproduktive Pipettiervorrichtung 10 erreicht.

## Patentansprüche

1. Pipettiervorrichtung (10) mit einem Führungsgestell (12) mit einer ersten Linearführungsschiene (52) und mit einer zweiten Linearführungsschiene (56), wobei die erste und die zweite Linearführungsschiene (52, 56) parallel zueinander längs einer Verlagerungsachse (VL) verlaufen und orthogonal zur Verlagerungsachse (VL) mit Entfernung voneinander vorgesehen sind, und mit einem Pipettierkanal (14), welcher sich längs einer zur Verlagerungsachse (VL) nicht-parallelen, vorzugsweise orthogonalen, Kanalachse (K14) erstreckt und welcher mit einem ersten Lagerbauteil (54) an der ersten Linearführungsschiene (52) und mit einem zweiten Lagerbauteil (58) an der zweiten Linearführungsschiene (56) längs der Verlagerungsachse (VL) verlagerbar geführt ist, wobei der Pipettierkanal (14) gemeinsam mit dem ersten Lagerbauteil (54) und mit dem zweiten Lagerbauteil (58) längs der Verlagerungsachse (VL) verlagerbar ist, wobei die Pipettiervorrichtung (10) zur Kopplung des ersten und des zweiten Lagerbauteils (54, 58) zur gemeinsamen Verlagerungsbewegung längs der Verlagerungsachse (VL) eine Halterungsanordnung (22) aufweist, welche das erste und das zweite Lagerbauteil (54, 58) miteinander verbindet und an welcher der Pipettierkanal (14) längs seiner Kanalachse (K14) verstellbar aufgenommen ist, wobei die Halterungsanordnung (22) eine Trägeranordnung (24) aufweist, welche das erste und das zweite Lagerbauteil (54, 58) zur gemeinsamen Bewegung längs der Verlagerungsachse (VL) starr miteinander verbindet, wobei die Pipettiervorrichtung (10) eine gesondert von der Trägeranordnung (24) ausgebildete und mit der Trägeranordnung (24) zur gemeinsamen Verlagerungsbewegung verbundene Verstellanordnung (26) aufweist, an welcher der Pipettierkanal (14) längs der Kanalachse (K14) verstellbar aufgenommen ist,
**dadurch gekennzeichnet, dass** das erste und das zweite Lagerbauteil (54, 58) zur Vergrößerung der Führungslänge des Pipettierkanals längs der Verlagerungsachse (VL), verglichen mit einer Anordnung des ersten und des zweiten Lagerbauteils (54, 58) an derselben Position längs der Verlagerungsachse (VL), längs der Verlagerungsachse (VL) mit Abstand (A) voneinander angeordnet sind.

2. Pipettiervorrichtung (10) nach Anspruch 1,
**dadurch gekennzeichnet, dass** der Abstand des ersten Lagerbauteils (54) längs der Verlagerungsachse (VL) vom Pipettierkanal (14) und der Abstand des zweiten Lagerbauteils (58) längs der Verlagerungsachse (VL) vom Pipettierkanal (14) betragsmäßig gleich groß sind.

3. Pipettiervorrichtung (10) nach einem der Ansprüche 1 oder 2,
**dadurch gekennzeichnet, dass** das erste und das zweite Lagerbauteil (54, 58) längs einer zur Verlagerungsachse (VL) orthogonalen und von einer Entfernungsachse, welche in Richtung der kürzesten Entfernung zwischen der ersten (52) und der zweiten Linearführungsschiene (56) verläuft, verschiedenen Versatzachse (VA) mit Versatz (V) voneinander angeordnet sind.

4. Pipettiervorrichtung (10) nach Anspruch 3,
**dadurch gekennzeichnet, dass** die Versatzachse (VA) nicht-parallel, vorzugsweise orthogonal, zur Kanalachse (K14) orientiert ist.

5. Pipettiervorrichtung (10) nach Anspruch 3 oder 4,
**dadurch gekennzeichnet, dass** der Versatz (V) zwischen dem ersten und dem zweiten Lagerbauteil (54, 58) längs der Versatzachse (VA) betragsmäßig kleiner ist als der Abstand (A) zwischen dem ersten und dem zweiten Lagerbauteil (54, 58) längs der Verlagerungsachse (VL).

6. Pipettiervorrichtung (10) nach einem der vorhergehenden Ansprüche,
**dadurch gekennzeichnet, dass** das Führungsgestell (12) längs einer sowohl zur Verlagerungsachse (VL) nicht-parallelen, vorzugsweise orthogonalen, als auch zur Kanalachse (K14) nicht-parallelen, vorzugsweise orthogonalen, Verfahrachse (VF) verfahrbar ist, wobei bevorzugt eine Arbeitsebene (AE) der Pipettiervorrichtung (10), auf welcher Behälter für Pipettiervorgänge bereitgestellt werden, sowohl zur Verlagerungsachse (VL) als auch zur Verfahrachse (VF) parallel ist.

7. Pipettiervorrichtung (10) nach einem der vorhergehenden Ansprüche,
**dadurch gekennzeichnet, dass** das erste und das zweite Lagerbauteil (54, 58) im Wesentlichen identisch ausgebildet und bevorzugt relativ zueinander entweder
um eine zur Verlagerungsachse (VL) orthogonale und zu einer Arbeitsebene (AE) der Pipettiervorrichtung (10), auf welcher Behälter für Pipettiervorgänge bereitgestellt werden, parallele Drehachse um 180° verdreht
oder
um eine zur Verlagerungsachse (VL) parallele Drehachse um 180° verdreht
angeordnet sind.

8. Pipettiervorrichtung (10) nach einem der vorhergehenden Ansprüche,
**dadurch gekennzeichnet, dass** das Führungsgestell (12) einen Stator (28) eines Linearmotors mit einer Magnetanordnung (36, 37) aufweist und dass die Halterungsanordnung (22) einen Läufer (34) des Linearmotors mit einer Spulenanordnung aufweist.

9. Pipettiervorrichtung (10) nach einem der vorhergehenden Ansprüche,
**dadurch gekennzeichnet, dass** das Führungsgestell (12) eine dritte und eine vierte Linearführungsschiene (60, 64) aufweist, welche parallel zueinander längs der Verlagerungsachse (VL) verlaufen und mit Entfernung von voneinander vorgesehen sind, wobei die Pipettiervorrichtung (10) einen weiteren Pipettierkanal (16) aufweist, welcher sich längs einer zur Kanalachse (K16) parallelen weiteren Kanalachse (K16) erstreckt und welcher mit einem dritten Lagerbauteil (62) an der dritten Linearführungsschiene (60) und mit einem vierten Lagerbauteil (66) an der vierten Linearführungsschiene (64) längs der Verlagerungsachse (VL) verlagerbar geführt ist, wobei das dritte und das vierte Lagerbauteil (62, 66) längs der Verlagerungsachse (VL) mit Abstand (A) voneinander angeordnet sind.

10. Pipettiervorrichtung (10) nach Anspruch 9,
**dadurch gekennzeichnet, dass** die Entfernung zwischen der ersten und der zweiten Führungsschiene (52, 56) betragsmäßig gleich der Entfernung zwischen der dritten und der vierten Führungsschiene (60, 64) ist.

11. Pipettiervorrichtung (10) nach Anspruch 9 oder 10,
**dadurch gekennzeichnet, dass** die Entfernung zwischen der ersten und der dritten Führungsschiene (52, 60) betragsmäßig gleich der Entfernung zwischen der zweiten und der vierten Führungsschiene (56, 64) ist und dass die Entfernung zwischen der ersten und der vierten Führungsschiene (52, 64) betragsmäßig gleich der Entfernung zwischen der zweiten und der dritten Führungsschiene (56, 60) ist.

12. Pipettiervorrichtung (10) nach einem der Ansprüche 9 bis 11,
**dadurch gekennzeichnet, dass** der weitere Pipettierkanal (16) eine weitere Halterungsanordnung (22) aufweist, welche das dritte und das vierte Lagerbauteil (62, 66) miteinander verbindet und an welcher der weitere Pipettierkanal (16) längs seiner weiteren Kanalachse (K16) verstellbar aufgenommen ist.

13. Pipettiervorrichtung (10) nach Anspruch 12,
**dadurch gekennzeichnet, dass** die Halterungsanordnung (22) und die weitere Halterungsanordnung (22) jeweils eine Trägeranordnung (24) aufweisen, welche zwei an unterschiedlichen Führungsschienen geführte Lagerbauteile (54, 58, 62, 66) miteinander verbindet, und eine gesondert von der Trägeranordnung (24) ausgebildete und mit dieser zur gemeinsamen Verlagerungsbewegung verbundene Verstellanordnung (26) aufweisen, an welcher der jeweilige Pipettierkanal (14, 16) längs der Kanalachse (K14, K16) verstellbar aufgenommen ist.

14. Pipettiervorrichtung (10) nach Anspruch 13,
**dadurch gekennzeichnet, dass** die Verstellanordnungen (26) der Halterungsanordnung (22) und der weiteren Halterungsanordnung (22) im Wesentlichen identisch ausgebildet und relativ zum Führungsgestell (12) identisch orientiert angeordnet sind.

15. Pipettiervorrichtung (10) nach Anspruch 13 oder 14,
**dadurch gekennzeichnet, dass** die Trägeranordnungen (24) der Halterungsanordnung (22) und der weiteren Halterungsanordnung (22) im Wesentlichen identisch ausgebildet und relativ zueinander unterschiedlich orientiert angeordnet sind.

16. Pipettiervorrichtung (10) nach Anspruch 15,
**dadurch gekennzeichnet, dass** die Trägeranordnungen (24) der Halterungsanordnung (22) und der weiteren Halterungsanordnung (22) relativ zueinander
um eine zur Verlagerungsachse (VL) orthogonale und zu einer Arbeitsebene (AE) der Pipettiervorrichtung (10), auf welcher Behälter für Pipettiervorgänge bereitgestellt werden, parallele Drehachse um 180° verdreht
oder/und
um eine zu der Arbeitsebene (AE) der Pipettiervorrichtung (10) orthogonale Drehachse um 180° verdreht
angeordnet sind.

17. Pipettiervorrichtung (10) nach einem der Ansprüche 9 bis 16, unter Einbeziehung des Anspruchs 8,
**dadurch gekennzeichnet, dass** das Führungsgestell (12) einen weiteren Stator (30) eines weiteren Linearmotors mit einer weiteren Magnetanordnung aufweist und dass die weitere Halterungsanordnung einen weiteren Läufer (50) des Linearmotors mit einer weiteren Spulenanordnung aufweist.

18. Pipettiervorrichtung (10) nach Anspruch 17,
**dadurch gekennzeichnet, dass** der Stator (28) mit der Magnetanordnung (36) einerseits und der weitere Stator (30) mit der weiteren Magnetanordnung andererseits im Wesentlichen identisch ausgebildet und bevorzugt in ihrer Orientierung relativ zueinander
entweder
um eine zur Verlagerungsachse (VL) orthogonale und zu einer Arbeitsebene (AE) der Pipettiervorrichtung (10), auf welcher Behälter für Pipettiervorgänge bereitgestellt werden, parallele Drehachse um 180° verdreht
oder
um eine zur Verlagerungsachse (VL) parallele Drehachse um 180° verdreht
angeordnet sind.

19. Pipettiervorrichtung (10) nach Anspruch 18,
**dadurch gekennzeichnet, dass** der Läufer (34) mit der Spulenanordnung einerseits und der weitere Läufer (50) mit der weiteren Spulenanordnung andererseits im Wesentlichen identisch ausgebildet und in ihrer Orientierung relativ zueinander um eine zur Verlagerungsachse (VL) orthogonale und zu einer Arbeitsebene (AE) der Pipettiervorrichtung (10), auf welcher Behälter für Pipettiervorgänge bereitgestellt werden, parallele Drehachse um 180° verdreht angeordnet sind.

20. Pipettiervorrichtung (10) nach Anspruch 19, unter Einbeziehung des Anspruchs 14,
**dadurch gekennzeichnet, dass** die Trägeranordnung (24) der Halterungsanordnung (22) einerseits und die weitere Trägeranordnung (24) der weiteren Halterungsanordnung (22) andererseits je einen Läufer (34, 50) aufweisen und einschließlich dieses Läufers (34, 50) im Wesentlichen identisch ausgebildet und in ihrer Orientierung relativ zueinander um eine zur Verlagerungsachse (VL) orthogonale und zu einer Arbeitsebene (AE) der Pipettiervorrichtung (10), auf welcher Behälter für Pipettiervorgänge bereitgestellt werden, parallele Drehachse um 180° verdreht angeordnet sind.

21. Pipettiervorrichtung (10) nach einem der Ansprüche 9 bis 20,
**dadurch gekennzeichnet, dass** sie eine Mehrzahl von Funktionseinheiten in Form von Pipettierkanälen (14) und weiteren Pipettierkanälen (16) aufweist, wobei längs der Verlagerungsachse (VL) mit Ausnahme der endseitigen Funktionseinheiten für eine Mehrzahl von, vorzugsweise für alle übrigen Funktionseinheiten gilt, dass ein Pipettierkanal (14) zwischen zwei weiteren Pipettierkanälen (16) und ein weiterer Pipettierkanal (16) zwischen zwei Pipettierkanälen (14) angeordnet ist.

## Claims

1. A pipetting apparatus (10) having a guidance frame (12) with a first linear guidance rail (52) and with a second linear guidance rail (56), the first and the second linear guidance rail (52, 56) proceeding parallel to one another along a displacement axis (VL) and being provided at a distance from one another orthogonally to the displacement axis (VL) , and having a pipetting channel (14) which extends along a channel axis (K14) which is nonparallel, preferably orthogonal, to the displacement axis (VL) channel axis (K14) and which is guided displaceably along the displacement axis (VL) by a first bearing component (54) on the first linear guidance rail (52) and by a second bearing component (58) on the second linear guidance rail (56),
wherein the pipetting device (10) has a retaining arrangement (22) for coupling the first and second bearing components (54, 58) for joint displacement movement along the displacement axis (VL), which retaining arrangement connects the first and second bearing components (54, 58) to one another and on which the pipetting channel (14) is adjustably received along its channel axis (K14), wherein the retaining arrangement (22) has a carrier arrangement (24), which rigidly connects the first and the second bearing component (54, 58) to one another for joint movement along the displacement axis (VL), the pipetting device (10) having an adjustment arrangement (26) formed separately from the carrier arrangement (24) and connected to the carrier arrangement (24) for joint displacement movement on which the pipetting channel (14) is received adjustably along the channel axis (K14),
**characterized in that** the first and the second bearing component (54, 58) are arranged at a distance (A) from one another along the displacement axis (VL) in order to increase the guide length of the pipetting channel along the displacement axis (VL), compared with an arrangement of the first and second bearing components (54, 58) at the same position along the displacement axis (VL).

2. The pipetting apparatus (10) according to Claim 1,
**characterized in that** the spacing of the first bearing component (54) from the pipetting channel (14) along the displacement axis (VL), and the spacing of the second bearing component (58) from the pipetting channel (14) along the displacement axis (VL), are of equal magnitude.

3. The pipetting apparatus (10) according to one of Claims 1 or 2,
**characterized in that** the first and the second bearing component (54, 58) are arranged with an offset (V) from one another along an offset axis (VA) that is orthogonal to the displacement axis (VL) and is different from a distance axis that proceeds in the direction of the shortest distance between the first (52) and the second linear guidance rail (56).

4. The pipetting apparatus (10) according to Claim 3,
**characterized in that** the offset axis (VA) is nonparallel, preferably orthogonal, to the channel axis (K14).

5. The pipetting apparatus (10) according to Claim 3 or 4,
**characterized in that** the magnitude of the offset (V) between the first and the second bearing component (54, 58) along the offset axis (VA) is less than the spacing (A) between the first and the second bearing component (54, 58) along the displacement axis (VL).

6. The pipetting apparatus (10) according to one of the preceding claims,
**characterized in that** the guidance frame (12) is movable along a movement axis (VF) that is both nonparallel, preferably orthogonal, to the displacement axis (VL) and also nonparallel, preferably orthogonal, to the channel axis (K14), a working plane (AE) of the pipetting apparatus (10), on which containers for pipetting operations are furnished, being parallel both to the displacement axis (VL) and to the movement axis (VF).

7. The pipetting apparatus (10) according to one of the preceding claims,
**characterized in that** the first and the second bearing component (54, 58) are embodied substantially identically and are preferably arranged relative to one another
either rotated 180° around a rotation axis that is orthogonal to the displacement axis (VL) and parallel to a working plane (AE) of the pipetting apparatus (10) on which containers for pipetting operations are furnished;
or rotated 180° around a rotation axis parallel to the displacement axis (VL).

8. The pipetting apparatus (10) according to one of the preceding claims, **characterized in that** the guidance frame (12) comprises a stator (28) of a linear motor having a magnet arrangement (36, 37); and the retaining arrangement (22) comprises a rotor (34) of the linear motor having a coil arrangement.

9. The pipetting apparatus (10) according to one of the preceding claims, **characterized in that** the guidance frame (12) comprises a third and a fourth linear guidance rail (60, 64) that proceed parallel to one another along the displacement axis (VL) and are provided at a distance from one another, the pipetting apparatus (10) comprising a further pipetting channel (16) that extends along a further channel axis (K16) parallel to the channel axis (K14) and is guided displaceably along the displacement axis (VL) with a third bearing component (62) on the third linear guidance rail (60) and with a fourth bearing component (66) on the fourth linear guidance rail (64), the third and the fourth bearing component (62, 66) being arranged with a spacing (A) from one another along the displacement axis (VL).

10. The pipetting apparatus (10) according to Claim 9,
**characterized in that** the distance between the first and the second guidance rail (52, 56) is equal in magnitude to the distance between the third and the fourth guidance rail (60, 64).

11. The pipetting apparatus (10) according to Claim 9 or 10,
**characterized in that** the distance between the first and the third guidance rail (52, 60) is equal in magnitude to the distance between the second and the fourth guidance rail (56; 64); and the distance between the first and fourth guidance rail (52, 64) is equal in magnitude to the distance between the second and the third guidance rail (56, 60).

12. The pipetting apparatus (10) according to one of Claims 9 to 11,
**characterized in that** the further pipetting channel (16) comprises a further retaining arrangement (22) which connects the third and the fourth bearing component (62, 66) to one another and at which the further pipetting channel (16) is received shiftably along its further channel axis (K16).

13. The pipetting apparatus (10) according to Claim 12, **characterized in that** the retaining arrangement (22) and the further retaining arrangement (22) each comprise a carrier arrangement (24) that connects to one another two bearing components (54, 58, 62, 66) guided on different guidance rails, and comprise a shifting arrangement (26), embodied separately from the carrier arrangement (24) and connected thereto for displacement motion together, on which the respective pipetting channel (14, 16) is received shiftably along the channel axis (K14, K16).

14. The pipetting apparatus (10) according to Claim 13,
**characterized in that** the shifting arrangements (26) of the retaining arrangement (22) and of the further retaining arrangement (22) are embodied substantially identically and are arranged with an identical orientation relative to the guidance frame (12).

15. The pipetting apparatus (10) according to Claim 13 or 14,
**characterized in that** the carrier arrangements (24) of the retaining arrangement (22) and of the further retaining arrangement (22) are embodied substantially identically and are arranged with a different orientation relative to one another.

16. The pipetting apparatus (10) according to Claim 15,
**characterized in that** the carrier arrangements (24) of the retaining arrangement (22) and of the further retaining arrangement (22) are arranged relative to one another
rotated 180° around a rotation axis orthogonal to the displacement axis (VL) and parallel to a working plane (AE) of the pipetting apparatus (10) on which containers for pipetting operations are furnished;
and/or rotated 180° around a rotation axis orthogonal to the working plane (AE) of the pipetting apparatus (10).

17. The pipetting apparatus (10) according to one of Claims 9 to 16, incorporating Claim 8,
**characterized in that** the guidance frame (12) comprises a further stator (30) of a further linear motor having a further magnet arrangement; and the further retaining arrangement comprises a further rotor (50) of the linear motor having a further coil arrangement.

18. The pipetting apparatus (10) according to Claim 17,
**characterized in that** on the one hand the stator (28) having the magnet arrangement (36), and on the other hand the further stator (30) having the further magnet arrangement, are embodied substantially identically and preferably are arranged in their orientation relative to one another
either rotated 180° around a rotation axis that is orthogonal to the displacement axis ((VL) and parallel to a working plane (AE) of the pipetting apparatus (10) on which containers for pipetting operations are furnished;
or rotated 180° around a rotation axis parallel to the displacement axis (VL).

19. The pipetting apparatus (10) according to Claim 18,
**characterized in that** on the one hand the rotor (34) having the coil arrangement, and on the other hand the further rotor (50) having the further coil arrangement, are embodied substantially physically identically and are arranged in their orientation relative to one another rotated 180° around a rotation axis that is orthogonal to the displacement axis (VL) and parallel to a working plane (AE) of the pipetting apparatus (10) on which containers for pipetting operations are furnished.

20. The pipetting apparatus (10) according to Claim 19, incorporating Claim 14, **characterized in that** on the one hand the carrier arrangement (24) of the retaining arrangement (22), and on the other hand the further carrier arrangement (24) of the further retaining arrangement (22), each comprise a rotor (34, 50) and, including that rotor (34, 50), are embodied substantially identically and are arranged in their orientation relative to one another rotated 180° around a rotation axis orthogonal to the displacement axis (VL) and parallel to a working plane (AE) of the pipetting apparatus (10) on which containers for pipetting operations are furnished.

21. The pipetting apparatus (10) according to one of Claims 19 to 20,
**characterized in that** it comprises a plurality of functional units in the form of pipetting channels (14) and further pipetting channels (16), such that along the displacement axis (VL), it is the case for a plurality of functional units with the exception of the end-located functional units, preferably for all the remaining functional units, that one pipetting channel (14) is arranged between two further pipetting channels (16), and one further pipetting channel (16) between two pipetting channels (14).

## Revendications

1. Dispositif de pipetage (10) avec un châssis de guidage (12) avec un premier rail de guidage linéaire (52) et avec un deuxième rail de guidage linéaire (56), le premier et le deuxième rail de guidage linéaire (52, 56) s'étendant parallèlement l'un à l'autre le long d'un axe de déplacement (VL) et étant prévus orthogonalement par rapport à l'axe de déplacement (VL) à une certaine distance l'un de l'autre, et avec un canal de pipetage (14) qui s'étend le long d'un axe non parallèle, de préférence orthogonal, par rapport à l'axe de déplacement (VL) et qui est guidé de manière à pouvoir être déplacé le long de l'axe de déplacement (VL) par un premier composant de palier (54) sur le premier rail de guidage linéaire (52) et par un deuxième composant de palier (58) sur le deuxième rail de guidage linéaire (56), le canal de pipetage (14) pouvant être déplacé le long de l'axe de déplacement (VL) conjointement avec le premier composant de palier (54) et avec le deuxième composant de palier (58),
le dispositif de pipetage (10) présentant, pour le couplage du premier et du deuxième composant de palier (54, 58) en vue d'un mouvement de déplacement commun le long de l'axe de déplacement (VL), un agencement de fixation (22) qui relie entre eux le premier et le deuxième composant de palier (54, 58) et sur lequel le canal de pipetage (14) est reçu de manière réglable le long de son axe de canal (K14), l'agencement de fixation (22) présentant un agencement de support (24), qui relie rigidement entre eux le premier et le deuxième composant de palier (54, 58) pour un mouvement commun le long de l'axe de déplacement (VL), le dispositif de pipetage (10) présentant un dispositif de réglage (26) réalisé séparément du agencement de support (24) et relié au agencement de support (24) pour un mouvement de déplacement commun, sur lequel le canal de pipetage (14) est reçu de manière réglable le long de l'axe de canal (K14),
**caractérisé en ce que** le premier et le deuxième composant de palier (54, 58) sont disposés à une distance (A) l'un de l'autre le long de l'axe de déplacement (VL) pour augmenter la longueur de guidage du canal de pipetage le long de l'axe de déplacement (VL), par rapport à une disposition du premier et du deuxième composant de palier (54, 58) à la même position le long de l'axe de déplacement (VL).

2. Dispositif de pipetage (10) selon la revendication 1,
**caractérisé en ce que** la distance du premier composant de palier (54) le long de l'axe de déplacement (VL) par rapport au canal de pipetage (14) et la distance du deuxième composant de palier (58) le long de l'axe de déplacement (VL) par rapport au canal de pipetage (14) sont égales en valeur absolue.

3. Dispositif de pipetage (10) selon l'une des revendications 1 ou 2,
**caractérisé en ce que** les premier et deuxième composant de palier (54, 58) sont disposés avec un décalage (V) l'un par rapport à l'autre le long d'un axe de décalage (VA) orthogonal à l'axe de déplacement (VL) et différent d'un axe de distance qui s'étend dans la direction de la distance la plus courte entre le premier (52) et le deuxième (56) rail de guidage linéaires.

4. Dispositif de pipetage (10) selon la revendication 3,
**caractérisé en ce que** l'axe de décalage (VA) est orienté de manière non parallèle, de préférence orthogonale, par rapport à l'axe du canal (K14).

5. Dispositif de pipetage (10) selon la revendication 3 ou 4,
**caractérisé en ce que** le décalage (V) entre le premier et le deuxième composant de palier (54, 58) le long de l'axe de décalage (VA) est inférieur en valeur absolue à la distance (A) entre le premier et le deuxième composant de palier (54, 58) le long de l'axe de décalage (VL).

6. Dispositif de pipetage (10) selon l'une des revendications précédentes, **caractérisé en ce que** le châssis de guidage (12) peut être déplacé le long d'un axe de déplacement (VF) non parallèle, de préférence orthogonal, par rapport à l'axe de déplacement (VL), ainsi que non parallèle, de préférence orthogonal, par rapport à l'axe du canal (K14), de préférence un plan de travail (AE) du dispositif de pipetage (10), sur lequel des récipients sont mis à disposition pour des opérations de pipetage, étant parallèle aussi bien par rapport à l'axe de déplacement (VL) que par rapport à l'axe de déplacement (VF).

7. Dispositif de pipetage (10) selon l'une des revendications précédentes,
**caractérisé en ce que** le premier et le deuxième composant de palier (54, 58) sont sensiblement identiques et sont de préférence disposés l'un par rapport à l'autre
soit
tournés de 180° autour d'un axe de rotation orthogonal par rapport à l'axe de déplacement (VL) et parallèle par rapport à un plan de travail (AE) du dispositif de pipetage (10), sur lequel des récipients sont mis à disposition pour des opérations de pipetage.
ou
tournés de 180° autour d'un axe de rotation parallèle par rapport à l'axe de déplacement (VL).

8. Dispositif de pipetage (10) selon l'une des revendications précédentes, **caractérisé en ce que** le châssis de guidage (12) comprend un stator (28) d'un moteur linéaire avec un agencement d'aimants (36, 37) et **en ce que** l'agencement de fixation (22) comprend un rotor (34) du moteur linéaire avec un agencement de bobines.

9. Dispositif de pipetage (10) selon l'une des revendications précédentes, **caractérisé en ce que** le châssis de guidage (12) comprend un troisième et un quatrième rail de guidage linéaire (60, 64) qui s'étendent parallèlement l'un à l'autre le long de l'axe de déplacement (VL) et sont prévus à une distance l'un de l'autre, le dispositif de pipetage (10) comprenant un autre canal de pipetage (16), qui s'étend le long d'un autre axe de canal (K16) parallèle à l'axe de canal (K16) et qui est guidé de manière à pouvoir être déplacé le long de l'axe de déplacement (VL) par un troisième composant de palier (62) sur le troisième rail de guidage linéaire (60) et par un quatrième composant de palier (66) sur le quatrième rail de guidage linéaire (64), le troisième et le quatrième composant de palier (62, 66) étant disposés le long de l'axe de déplacement (VL) à une distance (A) l'un de l'autre.

10. Dispositif de pipetage (10) selon la revendication 9,
**caractérisé en ce que** la distance entre le premier et le deuxième rail de guidage (52, 56) est égale en valeur absolue à la distance entre le troisième et le quatrième rail de guidage (60, 64).

11. Dispositif de pipetage (10) selon la revendication 9 ou 10,
**caractérisé en ce que** la distance entre le premier et le troisième rail de guidage (52, 60) est égale en valeur absolue à la distance entre le deuxième et le quatrième rail de guidage (56, 64) et **en ce que** la distance entre le premier et le quatrième rail de guidage (52, 64) est égale en valeur absolue à la distance entre le deuxième et le troisième rail de guidage (56, 60).

12. Dispositif de pipetage (10) selon l'une des revendications 9 à 11, **caractérisé en ce que** l'autre canal de pipetage (16) présente un autre agencement de fixation (22) qui relie entre eux le troisième et le quatrième composant de palier (62, 66) et sur lequel l'autre canal de pipetage (16) est reçu de manière réglable le long de son autre axe de canal (K16).

13. Dispositif de pipetage (10) selon la revendication 12,
**caractérisé en ce que** l'agencement de fixation (22) et l'autre agencement de fixation (22) présentent chacun un agencement de support (24) qui relie entre eux deux composants de palier (54, 58, 62, 66) guidés sur des rails de guidage différents, et présentent un agencement de réglage (26) réalisé séparément de l'agencement de support (24) et relié à celui-ci pour un mouvement de déplacement commun, sur lequel le canal de pipetage respectif (14, 16) est reçu de manière réglable le long de l'axe de canal (K14, K16).

14. Dispositif de pipetage (10) selon la revendication 13,
**caractérisé en ce que** les agencements de réglage (26) de l'agencement de fixation (22) et de l'autre agencement de fixation (22) sont essentiellement identiques et sont disposés avec une orientation identique par rapport au châssis de guidage (12).

15. Dispositif de pipetage (10) selon la revendication 13 ou 14,
**caractérisé en ce que** les agencements de support (24) de l'agencement de fixation (22) et de l'autre agencement de support (22) sont essentiellement identiques et orientés différemment l'un par rapport à l'autre.

16. Dispositif de pipetage (10) selon la revendication 15,
**caractérisé en ce que** les agencements de support (24) de l'agencement de fixation (22) et de l'autre agencement de fixation (22) sont disposés l'un par rapport à l'autre.
tournés de 180° autour d'un axe de rotation orthogonal à l'axe de déplacement (VL) et parallèle à un plan de travail (AE) du dispositif de pipetage (10) sur lequel des récipients sont mis à disposition pour des opérations de pipetage ou/et
tourné de 180° autour d'un axe de rotation orthogonal au plan de travail (AE) du dispositif de pipetage (10).

17. Dispositif de pipetage (10) selon l'une des revendications 9 à 16, en incluant la revendication 8,
**caractérisé en ce que** l'agencement de guidage (12) comprend un autre stator (30) d'un autre moteur linéaire avec un autre agencement d'aimants et **en ce que** l'autre agencement de fixation comprend un autre rotor (50) du moteur linéaire avec un autre agencement de bobines.

18. Dispositif de pipetage (10) selon la revendication 17,
**caractérisé en ce que** le stator (28) avec l'agencement d'aimants (36) d'une part et l'autre stator (30) avec l'autre agencement d'aimants d'autre part sont essentiellement identiques et sont de préférence orientés l'un par rapport à l'autre de la manière suivante
soit
tourné de 180° autour d'un axe de rotation orthogonal à l'axe de déplacement (VL) et parallèle à un plan de travail (AE) du dispositif de pipetage (10), sur lequel des récipients sont mis à disposition pour des opérations de pipetage ou
tournés de 180° autour d'un axe de rotation parallèle à l'axe de déplacement (VL).

19. Dispositif de pipetage (10) selon la revendication 18,
**caractérisé en ce que** le rotor (34) avec l'agencement de bobines d'une part et l'autre rotor (50) avec l'autre agencement de bobines d'autre part sont réalisés essentiellement de manière identique et sont disposés dans leur orientation l'un par rapport à l'autre en étant tournés de 180° autour d'un axe de rotation orthogonal à l'axe de déplacement (VL) et parallèle à un plan de travail (AE) du dispositif de pipetage (10), sur lequel des récipients sont mis à disposition pour des opérations de pipetage.

20. Dispositif de pipetage (10) selon la revendication 19, en incluant la revendication 14,
**caractérisé en ce que** l'agencement de support (24) de l'agencement de fixation (22) d'une part et l'autre agencement de support (24) de l'autre agencement de fixation (22) d'autre part présentent chacun un rotor (34, 50) et, y compris ce rotor (34, 50), sont réalisés essentiellement de manière identique et sont disposés dans leur orientation l'un par rapport à l'autre en étant tournés de 180° autour d'un axe de rotation orthogonal à l'axe de déplacement (VL) et parallèle à un plan de travail (AE) du dispositif de pipetage (10), sur lequel des récipients sont mis à disposition pour des opérations de pipetage.

21. Dispositif de pipetage (10) selon l'une des revendications 9 à 20, **caractérisé en ce qu'**il présente une pluralité d'unités fonctionnelles sous la forme de canaux de pipetage (14) et d'autres canaux de pipetage (16), sachant que le long de l'axe de déplacement (VL), à l'exception des unités fonctionnelles d'extrémité, pour une pluralité d'unités fonctionnelles, de préférence pour toutes les autres unités fonctionnelles, un canal de pipetage (14) est disposé entre deux autres canaux de pipetage (16) et un autre canal de pipetage (16) est disposé entre deux canaux de pipetage (14).
